# EUROPÄISCHE PATENTSCHRIFT

(11) **EP 3 914 774 B1**
(45) Veröffentlichungstag und Bekanntmachung des Hinweises auf die Patenterteilung: **21.06.2023**
(21) Anmeldenummer: 20705008.9
(22) Anmeldetag: 04.02.2020
(51) Int. Cl.: E01C 19/48, E02D 17/18, E01B 1/00

(54) **EINSATZMATERIALVERARBEITUNGSVORRICHTUNG UND VERFAHREN ZUM AUFTRAGEN, VERTEILEN UND VERDICHTEN VON EINSATZMATERIAL IN DEFINIERTEN SCHICHTHÖHEN**
FEED MATERIAL PROCESSING DEVICE AND METHOD FOR APPLYING, DISTRIBUTING AND COMPACTING FEED MATERIAL IN DEFINED LAYER HEIGHTS
SYSTÈME DE TRANSFORMATION DE MATIÈRE DE CHARGE ET PROCÉDÉ POUR APPLIQUER, DISTRIBUER ET COMPACTER LA MATIÈRE DE CHARGE À DES HAUTEURS DE COUCHE DÉFINIES

(30) Priorität: 14.02.2019 DE 102019201906
(43) Veröffentlichungstag der Anmeldung: 01.12.2021
(73) Patentinhaber: FLSmidth A/S, 2500 Valby (DK)
(72) Erfinder: TRÖSTER, Peter Michael, 72587 Römerstein-Böhringen (DE); HIRSCH, Manuel, 97993 Creglingen (DE); HELLWEG, Fynn, 76131 Karlsruhe (DE); PESCHINA, Adrian, 75438 Knittlingen (DE); GALENZOWSKI, Johannes, 76137 Karlsruhe (DE); ZHANG, Boya, 76133 Karlsruhe (DE)
(86) Internationale Anmeldenummer: PCT/EP2020/052699
(87) Internationale Veröffentlichungsnummer: WO 2020/164958

(56) Entgegenhaltungen:
- EP-A1- 3 284 867
- WO-A1-2004/074578
- CN-A- 109 306 649
- US-A1- 2018 283 001

## Beschreibung

Die Erfindung betrifft eine Vorrichtung gemäß dem Oberbegriff des Anspruchs 1 und ein Verfahren gemäß dem Oberbegriff des Anspruchs 8 zum Auftragen, Verteilen und Verdichten von Material in definierbaren Schichthöhen, insbesondere für den Damm- oder Deichbau.

Für verschiedene Erdbauarbeiten ist es notwendig, Einsatzmaterial gemäß vorgegebenen Profilen aufzuschütten. Diese Anforderung stellt sich insbesondere beim Deichbau. Um die geforderte Festigkeit im aufgeschütteten Einsatzmaterial dauerhaft sicherstellen zu können, kann/darf das jeweilige Profil bzw. Material nicht komplett auf einmal aufgeschüttet werden (also nicht über die gewünschte End-Höhe oder Soll-Höhe), sondern muss in vielen Anwendungsfällen bzw. bei vielen Erdbau-Projekten in einzelnen Etappen aufgetragen werden, wobei nach der jeweiligen Etappe erfahrungsgemäß anschließend jeweils eine Verdichtung des Einsatzmaterials erfolgen muss. Nur dadurch kann die gewünschte Stabilität bzw. eine vorgegebene Verdichtungswirkung und damit die gewünschte Festigkeit und Widerstandskraft z.B. gegen Wasserdruck erreicht werden.

Anwendungsbeispiele für derlei Erdarbeiten, bei welchen die Verdichtung/Dichte des Einsatzmaterial von großer Bedeutung ist, sind der Damm-/bzw. Deichbau, oder auch der Bau von Autobahnen und Eisenbahntrassen, welche in vielen Fällen auf aufgeschütteten und verdichteten Dämmen errichtet werden.

Insbesondere besteht Interesse an einem besonders zeiteffizienten und möglichst auch zumindest teilweise automatisierten Bau von Dämmen (z.B. Deiche, Straßendämme, Bahnstreckendämme) oder sonstigen Erdbautätigkeiten. Speziell beim Deich-Bau sind die verfügbaren Zeitfenster für Reparaturen oder Neubau sehr schmal (Stichworte: Naturschutz, Hochwasserschutz, Wind- oder Sturmflut-Risiko).

Bisher werden Deiche und Dämme mit Hilfe von Baumaschinen errichtet, welche eher wenig effizient sind, und welche auch nur eingeschränkt automatisierbar sind, so dass viel Zeit und Arbeitsaufwand für den jeweiligen Bau aufgewendet werden muss. Beispiele für bisher verwendete Maschinen: Raupenfertiger mit einer Leistung von z.B. 1,500t/h Einsatzmaterial bei einer Geschwindigkeit von z.B. 20m/min und einer Bearbeitungsbreite von z.B. 12m bis 15m; oder: Vibrationswalzenzug mit Stampffußbandage für bindiges Material oder Vibrationswalzenzug mit Glattbandage für nichtbindiges Material. Für den Materialfluss können z.B. höhenverstellbare Materialrutschen verwendet werden, oder Technologien, die beim Beladen von Schiffen mit Schüttgut zum Einsatz kommen.

Aus der EP 3 284 867 A1 ist ein Böschungsfertiger bekannt.

Es besteht Interesse daran, Erdarbeiten oder sonstige Arbeiten mit vergleichbar hohem Materialdurchsatz zeit- und kosteneffizienter zu gestalten und möglichst auch zu einem gewissen Grad zu automatisieren.

Aufgabe der Erfindung ist es, eine Vorrichtung und ein Verfahren mit den eingangs beschriebenen Merkmalen zur Verfügung zu stellen, womit das Erstellen von insbesondere groß dimensionierten Bauwerken vereinfacht und möglichst auch besonders zeiteffizient ausgestaltet werden kann, insbesondere bei Verwendung von Einsatzmaterial in Ausgestaltung als Schüttgüter. Die Aufgabe besteht insbesondere in einer zeiteffizienten Materialablage in definierten Schichtstärken, insbesondere beim Damm- oder Deichbau.

Diese Aufgabe wird gelöst durch eine Vorrichtung und ein Verfahren gemäß den unabhängigen Ansprüchen 1 und 8. Vorteilhafte Ausführungsbeispiele werden in den Unteransprüchen 2-7,9-14 aufgeführt.

Der Begriff "in Materialfluss-Verbindung stehen" bedeutet dabei eine relative Anordnung derart, dass die jeweilige Komponente angeordnet und eingerichtet ist zum Wirken im Materialfluss oder zum Unterstützen des Materialflusses, insbesondere auf dem MaterialflussPfad. Anders ausgedrückt: Das von der Materialverteileinrichtung bereitgestellt Einsatzmaterial wird für die Verdichtungseinrichtung bereitgestellt oder zumindest von der Verdichtungseinrichtung bearbeitet, insbesondere unmittelbar beim Auftragen/Verteilen des Einsatzmaterials.

Als Rahmenstruktur ist dabei die Summe der konstruktiven Komponenten zu verstehen, welche die Stabilität und Anordnung der Vorrichtung sicherstellen können, insbesondere umfassend Ausleger, Balken, Träger, Fachwerkstrukturen, Stützen, Arme oder dergleichen strukturelle konstruktive Bauteile. Eine Rahmenstruktur kann dabei beispielsweise auch durch eine einzelne Vertikalstütze (turmartiger Aufbau) gekennzeichnet sein. Eine Rahmenstruktur kann dabei sowohl geschlossene oder symmetrische Strukturen (Stichwort: Portal) als auch offene oder asymmetrische Anordnungen umfassen, z.B. eine seitlich neben dem Bauwerk anzuordnende Krankonstruktion mit einem Stützpfeiler und einem oder mehreren daran gelagerten Ausleger.

Dabei können auch mehr als eine Materialzufuhreinrichtung vorgesehen sein (wenigstens eine Materialzufuhreinrichtung).

Die Verdichtungseinrichtung und die Materialverteileinrichtung sind in Abhängigkeit voneinander jeweils entlang eines vordefinierbaren Bewegungspfades verlagerbar, insbesondere derart, dass dieselbe Charge Einsatzmaterial sowohl von der Materialverteileinrichtung als auch von der Verdichtungseinrichtung gehandhabt wird. Auch bei einem kontinuierlichen Prozess bei kontinuierlichem Materialfluss kann dabei von einer Charge gesprochen werden, insbesondere in dem Sinne, dass die Materialverteileinrichtung und die Verdichtungseinrichtung zusammen einen vordefinierten Horizontalabschnitt schaffen und bearbeiten, nämlich mittels einer in Bezug auf ein Zeitfenster kontinuierlich oder diskontinuierlich bereitgestellten Materialcharge.

Ein Portal-Aufbau mit einer das zu errichtende Bauwerk komplett überspannenden Rahmenstruktur ist insbesondere beim Deichbau vorteilhaft, ist jedoch nicht notwendiger Weise erforderlich. Die zuvor definierte Aufgabe kann daher auch gelöst werden durch eine Einsatzmaterialverarbeitungsvorrichtung eingerichtet zum Ablegen/Auftragen, Verteilen und Verdichten von Einsatzmaterial in definierten/definierbaren Schichthöhen, insbesondere für den Damm-, Deich- und/oder Straßenbau, wobei die Einsatzmaterialverarbeitungsvorrichtung aufweist: ein Chassis mit wenigstens einem Fahrantrieb und wenigstens einem Fahrwerk; eine Rahmenstruktur, welche eine Arbeitsbreite für die Einsatzmaterialverarbeitungsvorrichtung bereitstellt; eine an die Rahmenstruktur gekoppelte oder daran/darin abgestützte Materialzufuhreinrichtung; eine an die Materialzufuhreinrichtung gekoppelte und zumindest abschnittsweise über die Arbeitsbreite insbesondere in einem zentrischen Bereich davon verlagerbare und an der Rahmenstruktur abgestützte/gelagerte Materialverteileinrichtung, welche an einer Vielzahl von Auftragepositionen innerhalb der Arbeitsbreite positionierbar ist; wobei die Materialverteileinrichtung zum schichtweisen Ablegen/Auftragen des Einsatzmaterials auf dem Boden in unterschiedlichen vordefinierbaren Höhenpositionen innerhalb der Arbeitsbreite eingerichtet ist, insbesondere zur Erstellung eines Damms/Deichs/Straßenuntergrunds, wobei die Einsatzmaterialverarbeitungsvorrichtung ferner aufweist: eine Steuerungseinrichtung eingerichtet zum Ansteuern der Materialverteileinrichtung, insbesondere eingerichtet zum Einstellen der Schichtdicke eines schichtweise aufgetragenen Einsatzmaterials; eine verlagerbar an der Rahmenstruktur und/oder an der Materialverteileinrichtung abgestützte/gelagerte Verdichtungseinrichtung, welche in Materialfluss-Verbindung mit der Materialzufuhreinrichtung steht; wobei die Steuerungseinrichtung ferner eingerichtet ist zum Regeln eines/des jeweiligen Bewegungspfades der Verdichtungseinrichtung und der Materialverteileinrichtung in Abhängigkeit voneinander jeweils innerhalb der Arbeitsbreite. Dies begünstigt z.B. auch eine Anwendung bei nur einseitig zugänglichen Bauwerken.

Erfindungsgemäß ist dabei das Fahrwerk Bestandteil eines Chassis umfassend wenigstens ein erstes und wenigstens ein zweites Fahrwerk sein, wobei die Rahmenstruktur an dem ersten und zweiten Fahrwerk abgestützt ist und eine Spannbreite der Einsatzmaterialverarbeitungsvorrichtung definiert und zwischen den Fahrwerken eine Arbeitsbreite für die Materialverteileinrichtung und die Verdichtungseinrichtung bereitstellt, welche jeweils an der Rahmenstruktur innerhalb der Arbeitsbreite verlagerbar sind.

Die erfindungsgemäße Vorrichtung kann auf vielfältige und effiziente Weise für unterschiedliche Erdarbeiten eingesetzt werden, ohne dass eine lange Anlernzeit für den Errichtungsprozess erforderlich ist. Dabei kann auch ein hohes Maß an Arbeitssicherheit realisiert werden, insbesondere dank minimiertem Verkehrsaufkommen auf der Baustelle oder dank zentralisierterem Materialfluss. Nicht zuletzt kann auch die Planung und Dokumentation des Baufortschritts erleichtert werden, insbesondere dank integrierter Sensorik und Messtechnik z.B. in Bezug auf ortsaufgelösten Materialeinsatz/Materialverbrauch.

Es hat sich gezeigt, dass mittels der erfindungsgemäßen Vorrichtung viele einzelne bisher erforderliche Arbeitsschritte in einen Prozess integriert werden können, insbesondere in einen integralen Prozess zur Errichtung des gesamten Deiches oder Damms oder Walls.

Es hat sich gezeigt, dass das Einsatzmaterial (bindig bis nichtbindig) mittels der erfindungsgemäßen Vorrichtung in definierten Schichtstärke auf exakte und gleichzeitig auch effiziente Weise aufgetragen und derart verdichtet werden kann, dass vorgegebene Verdichtungswerte reproduzierbar und in einem engen Toleranzbereich realisierbar sind, insbesondere in einem kombinierten Arbeitsschritt bzw. in einem integrierten Prozess.

Die erfindungsgemäße Art und Weise der Konstruktion ermöglicht nicht zuletzt auch eine hohe Variabilität bzw. Flexibilität des Prozesses hinsichtlich der zu erstellenden Geometrie des Walls bzw. der Aufschüttung bzw. der Materialanhäufung (z.B. Damm). Beispielsweise auch bei sehr nachteiligen Platzverhältnissen am Errichtungsort liefert die Erfindung daher Vorteile hinsichtlich der verfahrenstechnischen Möglichkeiten und hinsichtlich der Nutzung des verfügbaren Raumes.

Bisher wurde für Erarbeiten oder im Straßenbau Verdichtungswalzen verwendet, jedoch ohne dass dabei auch eine Zufuhr von Einsatzmaterial und/oder das Verteilen des Einsatzmaterials möglich waren.

Insbesondere im Straßenbau werden, unabhängig vom Arbeitsschritt des Verdichtens, so genannte Bohlen verwendet, die das Einsatzmaterial über die Arbeitsbreite insbesondere mittels Förderschnecken verteilen und möglicherweise teilweise auch vorverdichten können. Die nachträgliche Verwendung von separaten Verdichtungswalzen als eigenständige Baumaschinen zur anschließenden Verdichtung war dabei bisher jedoch noch erforderlich.

Insbesondere beim Deichbau gibt es Zeitdruck: Deiche können z.B. nicht während der Jahreszeiten mit erhöhtem Risiko hinsichtlich Starkwind bzw. Sturmfluten oder Flusshochwasser errichtet oder gewartet/erneuert werden. In vielen Regionen sind zudem starke zeitliche Einschränkungen durch Umweltschutzauflagen zu beachten (Stichworte: Brutzeiten, Amphibienwanderungen). Speziell beim Deichbau ermöglicht die vorliegende Erfindung eine zeit- und ressourceneffiziente Vorgehensweise, insbesondere da wenigstens zwei Prozess-Schritte, die üblicherweise getrennt ausgeführt werden müssen, zusammen ausgeführt werden können, insbesondere bei derselben Bewegung, insbesondere auf demselben Bewegungspfad, insbesondere simultan auf kontinuierliche Weise.

Deiche sind vergleichsweise komplexe Erdbauwerke, bei welchen in vielen Fällen eine Vielzahl unterschiedlicher Einsatzmaterialien verbaut werden müssen und in vordefinierten Dichte-Bereichen verdichtet werden müssen. Zwar gibt es auch Deiche, die zumindest abschnittsweise eine homogene Materialzusammensetzung aufweisen, jedoch sind diese Deiche eher weniger belastbar und daher nicht für besonders stark gefährdete Landstriche vorgesehen. Üblicherweise wird ein Deich in wenigstens vier Zonen unterschiedlicher Zusammensetzung und/oder unterschiedlicher Dichte unterteilt. Deich-Baumaßnahmen können unterschieden werden zwischen dem Neubau von Deichen und Deichertüchtigungen. Beim Neubau von Deichen wird der Deich optimaler Weise der Länge nach gebaut; dies erfolgt üblicherweise in wenigstens sechs aufeinanderfolgenden Phasen (I Rodung und Beseitigung von Hindernissen; II Untergrundvorbereitung; III Ausnehmen/Exkavation von Boden und Einebnung des Bodens; IV erste Eindeichung und Anschüttung umfassend wenigstens eine erste Verdichtung, insbesondere in wenigstens vier aufeinanderfolgenden Etappen jeweils mit Anschüttung und Verdichtung; V Aufbringen wenigstens einer Oberflächenschicht, optional umfassend wenigstens eine weitere Verdichtung; VI Auskleidung/Abdeckung des Deiches insbesondere auf der Wasserseite), jeweils mit entsprechendem Zeitaufwand und mit organisatorischem Aufwand hinsichtlich Ablauf der einzelnen Arbeitsschritte. Bei der häufiger bzw. regelmäßig erforderlichen Deichertüchtigung müssen Teile des alten Deiches mit in die Baumaßnahme einbezogen werden. Dafür muss mit bisher verfügbaren Baumaschinen nachteilige Weise z.B. ein Durchbruch durch den Deich erstellt werden, insbesondere um für die Baumaßnahme beidseitigen Zugang zum Deich zu erhalten. Derartige Deichunterbrechungen bringen hohe Risiken mit sich und erfordern z.B. in Hinblick auf Starkwind oder hohe Hochwasserpegel strenge und aufwändige Sicherheitsmaßnahmen z.B. in Hinblick auf ausreichend Puffer an Einsatzmaterial. Die Erfindung ermöglicht, diese Nachteile auf einfache und pragmatische Weise zu überwinden.

Erfindungsgemäß können vorbekannte Systeme oder Arbeitsweisen, insbesondere zumindest einerseits das Anschütten von Einsatzmaterial und andererseits das Verdichten des Einsatzmaterials, nun miteinander kombiniert werden. Dabei kann insbesondere in der vierten Phase beim Deichbau (Eindeichung und Anschüttung und Verdichtung) technischer Aufwand und Zeit eingespart werden.

Erfindungsgemäße vorrichtungstechnische Komponenten können auch wie folgt beschrieben werden. Eine Einsatzmaterialverarbeitungsvorrichtung umfasst insbesondere: eine Rahmenstruktur bzw. Tragstruktur eingerichtet zur Abstützung und/oder Verbindung aller Komponenten bzw. Teilsysteme der Vorrichtung; eine Materialzufuhreinrichtung eingerichtet zum Zuführen des Einsatzmaterials zum Ver-/Bearbeitungspunkt; eine Materialverteileinrichtung eingerichtet zum Verteilen des Einsatzmaterials über eine/die vordefinierbare bzw. einstellbare Arbeitsbreite; eine Steuerungseinrichtung eingerichtet zum Einstellen von Schichthöhen des verarbeiteten/aufgebrachten/geschichteten Einsatzmaterials, und optional ferner eingerichtet zur Vorverdichtung des geschichteten Einsatzmaterials (beispielsweise mittels eines Tampers/Stampfers/Bodenverfestigers); wenigstens eine Verdichtungseinrichtung; eine Steuerungseinrichtung eingerichtet zum Ansteuern wenigstens einer Verdichtungseinheit, insbesondere zum Lenken und/oder Ausrichten oder Schwenken der Verdichtungseinheit, bzw. eingerichtet zum Regeln des Verdichtungsprozesses.

Dabei umfasst die Steuerungseinrichtung beispielsweise Lage-, Temperatur-, Druck-, Durchfluss-, Feuchtigkeits-Sensoren und ist eingerichtet zum Regeln bezüglich des jeweiligen Messparameters, insbesondere um die jeweilige Einrichtung synchron zur Materialzufuhr fahren zu können und/oder um Abweichungen in der Trajektorie (Bewegungspfad), beispielsweise begründet durch Versatz an einem geneigten Hang, ausgleichen zu können.

Im Folgenden wird beispielhaft eine/die Funktionsweise der Vorrichtung beschrieben:
Das Einsatzmaterial wird über eine/die Materialverteileinrichtung auf die gewünschte Arbeitsbreite verteilt und wird von der steuer- bzw. regelbaren Materialverteileinrichtung in der vordefinierten gewünschten Einbauhöhe bzw. Schichtdicke abgelegt. Dabei kann wahlweise auch bereits eine Vorverdichtung erfolgen, insbesondere durch so genannte Tamper (z.B. beim Straßenbau), und/oder durch wenigstens eine Pressleiste. Eine Pressleiste ermöglicht nur eine vergleichsweise geringe Verdichtung, liefert jedoch den Vorteil, dass das Einsatzmaterial sehr glatt bzw. eben/plan abgelegt werden kann.

Anschließend wird das in definierter Schichthöhe abgelegte Einsatzmaterial durch eine/die Verdichtungseinrichtung verdichtet, vorzugsweise mittels wenigstens einer Verdichtungswalze (Verdichtungseinheit). Die Verdichtungseinrichtung ist vorzugsweise selbstfahrend ausgestaltet; die Verdichtungseinrichtung weist bevorzugt wenigstens einen Vortrieb (Fahrantrieb) auf.

Durch mindestens eine Lenkeinrichtung kann mindestens eine Verdichtungseinheit ausgerichtet bzw. orientiert bzw. verdreht werden, insbesondere um Kurven und Trajektorien abfahren zu können oder den Bewegungspfad zu korrigieren. Es hat sich gezeigt, dass vorteilhafter Weise zwei Verdichtungseinheiten in Ausgestaltung als Verdichtungswalzen eingesetzt werden, die jeweils beide im Winkel zur Tragstruktur orientierbar/verstellbar/lenkbar sind, insbesondere auch um einen Hundegang (bezüglich Drehbewegung abgestimmte Kinetik) realisieren zu können. Dies ermöglicht auch, die Verteileinheit derart zu positionieren, dass die neu aufgetragene Schicht sich optimal an die zuvor aufgetragene Schicht anschmiegen kann bzw. damit verbinden kann.

Bei einem Hundegang erfolgt eine Auslenkung sowohl der Vorderräder als auch der Hinterräder in die gleiche Richtung, wobei bei Geradeausfahrt auch ein Versatz der Spur ermöglicht werden kann. Dies vermindert jeweils nachteilige Effekte hinsichtlich Spurrinnenbildung und ermöglicht auch eine Stabilisierung des Fahrzeugs bzw. der Vorrichtung. Der Hundegang kann auch optional dann eingestellt werden, wenn die Druckbelastung fallweise bzw. streckenweise minimiert werden soll. Dies ermöglicht nicht zuletzt die Verwendung von einheitlichen Verdichtungseinheiten auch für unterschiedliche Einsatzmaterialien bzw. unterschiedliche Druck-Vorgaben.

Die Rahmenstruktur kann z.B. Führungen, insbesondere Schienen, für Fördereinheiten bereitstellen. Ferner kann die Rahmenstruktur Lager und Träger für den Materialfluss vom Boden bis zur Materialverteileinheit bereitstellen. Bevorzugt ermöglicht die Rahmenstruktur dabei eine Abstützung am Boden auf beiden Seiten des zu errichtenden Bauwerks, also in einer das Bauwerk vollständig überspannenden Anordnung.

Das zu verbauende Einsatzmaterial wird mittels wenigstens einer Materialfördereinrichtung, vorzugsweise wenigstens ein Förderband, zu einer ersten Materialübergabestelle transportiert. Von dort wird das Material, insbesondere nach Änderung der Materialflussrichtung, mittels wenigstens einer weiteren Materialfördereinrichtung zu einer verfahrbaren Materialverteileinrichtung (Einbaueinheit) weiter transportiert werden und dort von der Materialfördereinheit entnommen werden. Bevorzugt ist diejenige Materialfördereinheit, welche das Material von der Übergabestelle weitertransportiert, mindestens einfach längenverstellbar.

In der Einbaueinheit wird das einzubauende Material auf die gewünschte Arbeitsbreite verteilt und von der Verteileinrichtung in vordefinierbarer, regel- oder steuerbarer Einbauhöhe (Schichtdicke) aufgetragen. Dabei kann wahlweise auch bereits eine Vorverdichtung durch Tamper (vgl. Straßenfertiger) stattfinden.

Anschließend wird das in definierter Schichthöhe abgelegte Material durch eine Verdichtungseinrichtung, erfindungsgemäß eine Verdichtungswalze, verdichtet. Die Materialverteileinrichtung kann derart gesteuert und gelenkt werden, dass eventuelle Abweichungen der Laufrichtung (Bewegungspfad) korrigierbar sind, insbesondere auch zur Realisierung von optional gekrümmten Trajektorien. Die Materialverteileinrichtung kann insbesondere in zwei Richtungen bidirektional arbeiten, wobei vorzugsweise zwei Verdichtungseinheiten vorgesehen sind, eine vor und eine hinter der Materialverteileinrichtung. Eine Höhenverstellung der Materialverteileinrichtung ermöglicht das Einstellen der gewünschten Arbeitshöhe, zum Beispiel bei der Deichsanierung. Das Gesamtsystem kann selbstständig verfahren und dabei Neigungen und Höhendifferenzen durch eine optionale Höheausgleichsvorrichtung ausgleichen.

Über eine Eingabeeinrichtung kann der Vorrichtung ein Profil mit verschiedensten Parametern vorgegeben werden. Aufgezeichnete Messergebnisse von Sensoren dienen zur Dokumentation über das verbaute Material und die jeweiligen Verdichtungsparameter und - werte, insbesondere jeweils ortsaufgelöst.

Gemäß einem Ausführungsbeispiel ist die Verdichtungseinrichtung oder wenigstens eine Verdichtungseinheit der Verdichtungseinrichtung drehbar gelagert, insbesondere um eine Hochachse oder um eine im Winkel kleiner 45° zur Hochachse geneigte Drehachse, und wobei die Steuerungseinrichtung ferner eingerichtet ist zum Einstellen eines Lenkausschlages bzw eines Drehwinkels der wenigstens einen Verdichtungseinheit um die entsprechende Hochachse/Drehachse. Hierdurch können zusätzlich zeiteffizient erstellten Horizontalebenen/- streifen auch geneigte Seitenflächen des Bauwerks erstellt werden oder das Auftragen und Verdichten kann auf gekrümmten Bewegungspfaden erfolgen, beispielsweise auf kontinuierliche Weise an Richtungswechsel-Punkten (Umkehrpunkte für die Verlagerung der Materialverteil-/Verdichtungseinrichtung).

Gemäß einem Ausführungsbeispiel ist die Verdichtungseinrichtung oder wenigstens eine Verdichtungseinheit der Verdichtungseinrichtung höhenverstellbar (justierbar in Bezug auf die Höhenrichtung) gelagert, und wobei die Steuerungseinrichtung ferner eingerichtet ist zum Einstellen der Höhenposition oder zusätzlich auch einer Neigung der wenigstens einen Verdichtungseinheit. Hierdurch kann auch eine Feinjustage bei der Art und Weise der Verdichtung erfolgen, z.B. in Hinblick auf die Dichte des aufgetragenen Materials, insbesondere bevor das Material verdichtet wird.

Gemäß einem Ausführungsbeispiel weist die Verdichtungseinrichtung wenigstens eine oder wenigstens zwei Verdichtungseinheiten jeweils in Ausgestaltung als Rolle oder Walze mit wenigstens einer Roll-Achse auf, insbesondere jeweils in einer gelenkigen Lagerung eingerichtet zur Ausrichtung der Verdichtungseinheiten für einen Hundegang. Hierdurch kann auch eine gute Verbindung zwischen den einzelnen Schichten begünstigt werden.

Gemäß einem Ausführungsbeispiel weist die Verdichtungseinrichtung wenigstens eine Verdichtungseinheit auf, welche um eine Neigungsachse relativ zur Horizontalebene neigbar ist. Dies begünstigt z.B. das Verdichten von geneigten Flächen, insbesondere beim Deichbau. Gemäß einem Ausführungsbeispiel sind die Verdichtungseinrichtung und/oder die Materialverteileinrichtung jeweils bodenkontaktfrei verlagerbar, insbesondere in einer hängenden Anordnung an Zugmitteln an der Rahmenstruktur hängend, insbesondere höhenverstellbar über wenigstens eine Winde. Hierdurch wird auch große Bewegungsfreiheit ermöglicht.

Gemäß einem Ausführungsbeispiel weist die Verdichtungseinrichtung einen Antrieb eingerichtet zum autonomen Vortrieb (selbstfahrend) der Verdichtungseinrichtung auf. Dies ermöglicht auch, die auf die Rahmenstruktur wirkenden Kräfte zu minimieren und die Vortriebskräfte effektiv zu übertragen. Der Antrieb kann dabei z.B. an einer Achse einer jeweiligen Verdichtungseinheit der Verdichtungseinrichtung angreifen.

Gemäß einem Ausführungsbeispiel ist die Materialverteileinrichtung eingerichtet zum Verteilen des Einsatzmaterials über die gesamte Arbeitsbreite, insbesondere jeweils in den vordefinierbaren Höhenpositionen, insbesondere über eine Höhe von mindestens einigen Metern, insbesondere mindestens fünf oder zehn Metern.

Gemäß einem Ausführungsbeispiel sind die Materialverteileinrichtung und die Verdichtungseinrichtung eingerichtet zum Verteilen und Verdichten des Einsatzmaterials in/auf Horizontalstreifen mit vordefinierbarer Längserstreckung (Querschnittsbreite). Hierdurch wird ein systematisches rasterartiges, matrixartiges Vorgehen erleichtert; der Prozess kann auf besonders effiziente Weise durchgeführt werden. Die Einsatzmaterialverarbeitungsvorrichtung kann eingerichtet sein zum Auftragen, Verteilen und Verdichten des Einsatzmaterials in Horizontalstreifen, die über die Arbeitsbreite nacheinander in Vortriebsrichtung aneinander gereiht erstellt sind, insbesondere bei jeweils translatorischer Verlagerung von Materialverteileinrichtung und Verdichtungseinrichtung ausschließlich in Breitenrichtung, insbesondere bei matrixartigem Bewegungspfad mit schrittweiser Verlagerung des/der Fahrwerks/Fahrwerke in Vortriebsrichtung. Dies begünstigt auch die Abstützung hinsichtlich bedeutender Trägheitskräfte und Reaktionsmomente. Insbesondere das Verlagern in nur einer Richtung (eindimensional) kann dabei ein vergleichsweise schnelles Verlagern und einen effizienten Prozess ermöglichen.

Gemäß einem Ausführungsbeispiel weist die Verdichtungseinrichtung wenigstens zwei Verdichtungseinheiten auf, welche derart relativ zueinander positionierbar bzw. ausrichtbar sind, dass der/die Bewegungspfade der Verdichtungseinrichtung einen Hundegang abbilden.

Gemäß einem Ausführungsbeispiel sind die Materialverteileinrichtung und die Verdichtungseinrichtung in einer Vielzahl von Höhenpositionen über eine Höhe von mindestens 5m oder mindestens 10m positionierbar, insbesondere jeweils in relativen Höhenpositionen in Abhängigkeit voneinander oder in vordefinierbarem Höhenabstand zueinander.

Erfindungsgemäß beträgt die Spannbreite mindestens 35m oder mindestens 55m; und wobei das erste und zweite Fahrwerk jeweils seitlich die Arbeitsbreite nach außen begrenzen; und wobei die Einsatzmaterialverarbeitungsvorrichtung eine Arbeitsbreite definiert/aufweist, welche wenigstens 50% oder wenigstens 75% der Spannbreite der Einsatzmaterialverarbeitungsvorrichtung beträgt, insbesondere mindestens 50m. Dies begünstigt großen Materialumschlag (maximierten Materialdurchsatz) auch bei beengten Platzverhältnissen.

Beispielhafte Materialdurchsätze liegen z.B. im Bereich von 600 bis 1500 t/h [Tonnen pro Stunde]. Der spezifisch realisierbare Materialdurchsatz kann auch von der Verdichtbarkeit der Einsatzmaterialien abhängen, oder von den Anforderungen an die Verdichtungswerte je nach Einsatzgebiet (Dammbau, Straßenbau, Lärmschutzwall).

Beispielhafte Zeitfenster für einen Dammbau einer Höhe von 5m bis 10m, in Bezug auf den jeweils überspannbaren Längsabschnitt des Dammes, insbesondere bevor der Fahrantrieb weiteren Vortrieb erzeugen soll: je von der Vorrichtung überspanntem Längsabschnitt z.B. im Bereich von ca. einer Stunde.

Beispielsweise bei einem Reibungswinkel von ca. 30° (Winkel der inneren Reibung, unter dem Festkörper oder ein Schüttung belastet werden kann, ohne dass mit einem hohen Risiko eines Abrutschens gerechnet werden muss) und einem Verfahrweg von 20m (beispielhafter translatorischer Bewegungsfreiheitsgrad der Vorrichtung ohne Vortrieb im Fahrwerk erzeugen zu müssen) muss mit einem Materialbedarf von ca. 1300 m³ kalkuliert werden. Bei einem spezifischen Gewicht von Sand (ca. 1,2 bis 1,4 t/m³) muss mit einer Masse von ca. 1700 Tonnen kalkuliert werden. Dafür sind dann erfindungsgemäß beispielsweise ca. 1 bis 1,2h Zeit einzuplanen. Nach diesem Zeitfenster kann die Vorrichtung durch den Vortrieb in die nächste Längsposition verfahren werden, um einen weiteren Längsabschnitt des Damms zu erstellen.

Gemäß einem Ausführungsbeispiel weist die Rahmenstruktur wenigstens einen sich zumindest annähernd in Vorschubrichtung des Fahrantriebs erstreckenden Längsträger auf, welcher sich über eine Länge entsprechend einem Vielfachen eines einzelnen zu erstellenden Horizontalstreifens des zu erstellenden Bauwerks oder über eine Länge entsprechend einem Vielfachen der Längserstreckung eines/des die Materialverteileinrichtung und die Verdichtungseinrichtung lagernden Querträgers der Rahmenstruktur erstreckt. Dies begünstigt das Erstellen von einzelnen Horizontalabschnitten des Bauwerks, ohne dass dabei die Rahmenstruktur relativ zum Boden verlagert werden muss. Auch dies liefert hohe Stabilität selbst bei beträchtlich großen bewegten Massen.

Gemäß einem Ausführungsbeispiel ist die Arbeitsbreite der Einsatzmaterialverarbeitungsvorrichtung einstellbar, insbesondere mittels einer an der Rahmenstruktur ausgebildeten translatorischen Führung; und/oder wobei die Einsatzmaterialverarbeitungsvorrichtung eingerichtet ist zur Erstellung eines Erdbauwerkes mittels des Einsatzmaterials mit einer dreiecksförmigen oder trapezförmigen Querschnittsgeometrie.

Erfindungsgemäß ist die Einsatzmaterialverarbeitungsvorrichtung in Bezug auf die Arbeits-/Vortriebsrichtung symmetrisch aufgebaut mit zwei gegenüberliegend voneinander jeweils seitlich von der Arbeitsbreite anzuordnenden/angeordneten Stützen, jeweils mit einem Fahrwerk. Hierdurch kann auch eine gute Nutzung des verfügbaren Platzes begünstigt werden, insbesondere über die gesamte Spannbreite (maximale Arbeitsbreite).

Gemäß einem Ausführungsbeispiel ist die Rahmenstruktur modular aufgebaut, insbesondere als steckbare Konstruktionen mit einer Vielzahl von steckbaren Rahmenelementen, insbesondere als Stahlkonstruktion, insbesondere mit Fachwerkstruktur. Dies vereinfacht auch die Anpassung der Vorrichtung an die Größe und Geometrie des zu errichtenden Bauwerks.

Gemäß einem Ausführungsbeispiel definiert die Einsatzmaterialverarbeitungsvorrichtung wenigstens drei Materialübergabestellen auf dem von der Einsatzmaterialverarbeitungsvorrichtung definierten Materialflusspfad von einer anliefernden Materialtransporteinheit (z.B. Truck) bis zur von der Materialverteileinheit definierten Auftragsstelle, insbesondere eine erste Materialübergabestelle von einer ersten insbesondere kontinuierlich fördernden Fördereinrichtung zu einer zweiten insbesondere kontinuierlich fördernden Fördereinrichtung, eine zweite Materialübergabestelle von der zweiten Fördereinrichtung zu einer dritten insbesondere kontinuierlich fördernden Fördereinrichtung, und eine dritte Materialübergabestelle von der dritten Fördereinrichtung zur Materialverteileinheit/Materialverteileinrichtung. Inwieweit die Materialabgabe an der Auftragsstelle dann kontinuierlich oder diskontinuierlich erfolgt, kann mittels der Materialverteileinrichtung individuell eingestellt werden. Bevorzugt wird das Einsatzmaterial kontinuierlich bei einer kontinuierlichen translatorischen Verlagerung der Materialverteileinrichtung abgegeben.

Die Fördereinrichtungen können insbesondere jeweils als kontinuierlich fördernde und regelbare Förderbänder ausgestaltet sein. In den Materialübergabestellen kann jeweils eine Fördereinheit angeordnet sein. In den Materialübergabestellen kann jeweils auch eine Umorientierung oder Neuausrichtung der Materialflussrichtung erfolgen. Dies ermöglicht vergleichsweise große Transportgeschwindigkeiten in möglichst nur einer einzigen Richtung, also bei minimierten Trägheitskräften. Der Materialflusspfad kann dabei bei einer (systemfremden) anliefernden Materialtransporteinheit (z.B. Truck) beginnen, insbesondere indem das Einsatzmaterial chargenweise an die erste Fördereinrichtung übergeben wird.

Die Fördereinrichtungen können insbesondere gemäß wenigstens einer der folgenden Ausgestaltungen ausgestaltet sein oder in entsprechender Konfiguration verbaut sein:
- Fördereinrichtung/Förderband läuft auf Rahmenstruktur bzw. wird entlang der Rahmenstruktur oben auf der Rahmenstruktur geführt;
- Querträger hängt unter der Rahmenstruktur, umklammert beispielsweise die Rahmenstruktur wie eine Laufkatze oder wie ein Rollercoaster;
- Querträger läuft neben der Rahmenstruktur;

Die Materialübergabe erfolgt bevorzugt jeweils mittels stufenlos verfahrbarer Übergabeeinrichtungen/Fördereinheiten (z.B. Bandschleifenwagen, Abstreifer, rotierende Scheibe).

Gemäß einer Variante wird auf verfahrbare Querträger komplett verzichtet, insbesondere in Hinblick auf möglichst wenige bewegte Teile. Wahlweise kann alternativ wenigstes ein verfahrbarer Querträger vorgesehen sein, je nach Bedarf und spezifischer Anwendung.

Ein Portal-Aufbau mit einer das zu errichtende Bauwerk komplett überspannenden Rahmenstruktur ist insbesondere beim Deichbau vorteilhaft, ist jedoch nicht notwendiger Weise erforderlich. Die zuvor definierte Aufgabe kann daher auch gelöst werden durch ein Verfahren zum Ablegen/Auftragen, Verteilen und Verdichten von Einsatzmaterial in definierten/definierbaren Schichthöhen, insbesondere zum Damm-, Deich- und/oder Straßenbau, insbesondere mittels einer zuvor beschriebenen Einsatzmaterialverarbeitungsvorrichtung, wobei das Einsatzmaterial mittels einer Materialzufuhreinrichtung zumindest abschnittsweise innerhalb einer Arbeitsbreite gefördert wird; wobei das Einsatzmaterial mittels einer Materialverteileinrichtung innerhalb der Arbeitsbreite auf dem Boden aufgetragen und verteilt wird, indem die Materialverteileinrichtung an einer Vielzahl von Auftragepositionen positioniert oder daran entlang verlagert wird; wobei die Materialverteileinrichtung zum schichtweisen Ablegen/Auftragen des Einsatzmaterials auf dem Boden in unterschiedlichen vordefinierbaren Höhenpositionen positioniert/verlagert wird, insbesondere zur Erstellung eines Damms/Deichs/Straßenuntergrunds innerhalb der Arbeitsbreite, wobei die Materialverteileinrichtung und eine Verdichtungseinrichtung derart entlang eines/des jeweiligen Bewegungspfades der Verdichtungseinrichtung und der Materialverteileinrichtung in Abhängigkeit voneinander verlagert werden, dass das Einsatzmaterial in den jeweiligen Höhenpositionen innerhalb der Arbeitsbreite Fahrwerken Schicht für Schicht sowohl aufgetragen als auch verdichtet wird.

Optional kann dabei das Einsatzmaterial innerhalb der Arbeitsbreite zwischen wenigstens einem ersten und wenigstens einem zweiten Fahrwerk sowohl aufgetragen als auch verdichtet, wobei die Fahrwerke eine Rahmenstruktur abstützen, welche sich über eine Spannbreite über der Arbeitsbreite erstreckt, und an welcher Rahmenstruktur die Materialverteileinrichtung und die Verdichtungseinrichtung positioniert bzw. verlagert werden.

Gemäß einer Ausführungsform wird das Einsatzmaterial zwischen wenigstens zwei Fahrwerken, welche die Rahmenstruktur jeweils seitlich von der Arbeitsbreite abstützen, und optional auch unterhalb der Rahmenstruktur, also ohne Versatz in Vorschubrichtung, aufgetragen und verdichtet.

Gemäß einer Ausführungsform werden die Bewegungspfade von Materialverteileinrichtung und Verdichtungseinrichtung als zumindest annähernd symmetrisch ausgestaltete Bewegungspfade für eine synchrone Bewegung von Materialverteileinrichtung und Verdichtungseinrichtung über die Arbeitsbreite eingestellt, insbesondere für eine rein translatorisch an der Rahmenstruktur geführte Bewegung, insbesondere quer (zumindest annähernd orthogonal) zur Vorschubrichtung, also quer zur gewünschten Längserstreckung des zu errichtenden Bauwerks. Dies liefert weitere Synergien beim Koppeln/Integrieren dieser beiden Prozesse in einen einzigen Arbeitsschritt.

Gemäß einer Ausführungsform werden die einzelnen Höhenebenen des zu errichtenden Bauwerks bei stillstehendem Vortrieb/Fahrantrieb jeweils in mehreren Horizontalstreifen nacheinander erstellt, insbesondere in einer einzigen vordefinierten Höhenebene in wenigstens vier oder fünf Horizontalstreifen, insbesondere jeweils mit Versatz in Vorschubrichtung zwischen den Horizontalstreifen benachbarter Höhenebenen; und/oder wobei die einzelnen Höhenebenen des zu errichtenden Bauwerks bei stillstehendem Vortrieb jeweils in mehreren Horizontalstreifen nacheinander erstellt werden, wobei jeder Horizontalstreifen durch eine translatorische Verlagerung von Materialverteileinrichtung und Verdichtungseinrichtung entlang eines/des Querträgers der Rahmenstruktur über die gesamte Arbeitsbreite bzw. über die Soll-Breite des Bauwerks erfolgt, insbesondere durch eine einzige unidirektionale translatorische Verlagerung je Horizontalstreifen, insbesondere durch eine eindimensionale Verlagerung. Hierdurch kann ein effizienter Prozess auch bei vergleichsweise großen Massen- und Trägheitskräften sichergestellt werden.

Eine entsprechende Höhenebene des zu errichtenden Bauwerks kann in Bezug auf die Vorschubrichtung der Rahmenstruktur jeweils in einer ersten Phase in mehreren Horizontalstreifen nacheinander in Vorschubrichtung erstellt werden (Auftragen und Verdichten), insbesondere bei vordefinierter Anzahl von wenigstens sechs bis acht Horizontalstreifen (mit der Anzahl der Horizontalstreifen insbesondere in Abhängigkeit von der Längserstreckung von Längsträgern der Rahmenstruktur), und jeweils in einer zweiten Phase in einem daran anschließenden Längsabschnitt analog in den Höhenebenen erstellt werden, insbesondere mit den beiden Schritten in Wiederholung bis zum Erreichen der gewünschten Soll-Höhe des Bauwerks, insbesondere jeweils mit Versatz in Vorschubrichtung zwischen den Horizontalstreifen benachbarter Höhenebenen, insbesondere bei stillstehendem Vortrieb.

Gemäß einer Ausführungsform wird eine entsprechende Höhenebene des zu errichtenden Bauwerks in Bezug auf die Vorschubrichtung der Rahmenstruktur jeweils in einer ersten Etappe durch bidirektionales translatorisches Verlagern entlang der Rahmenstruktur über der Arbeitsbreite erstellt, insbesondere mit Versatz in Vortriebsrichtung zwischen dem Wechsel der Verlagerungsrichtung, und wird jeweils in einer zweiten Etappe in der nächsten Höhenebenen mit Versatz in Vortriebsrichtung und jeweils mit bezüglich der zuvor erstellten Höhenebene entgegengesetzter bidirektionaler translatorischer Verlagerungsrichtung erstellt, insbesondere mit den beiden Etappen in Wiederholung bis zum Erreichen der gewünschten Soll-Höhe des Bauwerks. Dies ermöglicht auch eine gute Stabilität, z.B. bei der Verwendung von Walzen als Verdichtungseinheiten. Dies ermöglicht auch ein besonders effizientes Verfahren.

Gemäß einer Ausführungsform wird als Einsatzmaterial wenigstens ein Material aus der folgenden Gruppe verwendet: bindige Böden, Schluff, Klei, Schüttgut, Erden, Steinmaterial, Sand, Kies, Sand-Kies-Gemisch, Beton, Wühltier-Schutzmaterial (insbesondere grober, scharfkantiger Schotter), Mutterboden; und/oder wobei eine Mehrzahl von Einsatzmaterialien verarbeitet und schichtweise aufgetragen werden, insbesondere wenigstens ein erstes Einsatzmaterial aus der Gruppe: bindige Böden, Schluff, Klei, Schüttgut, Erden, Steinmaterial, Sand, Kies, Sand-Kies-Gemisch, Beton, Wühltier-Schutzmaterial, Mutterboden; und wenigstens ein zweites Einsatzmaterial aus der Gruppe: bindige Böden, Schluff, Klei, Schüttgut, Erden, Steinmaterial, Sand, Kies, Sand-Kies-Gemisch, Beton, Wühltier-Schutzmaterial, Mutterboden. Wahlweise kann dem Einsatzmaterial wenigstens ein Additiv zugemischt sein/werden. Beispielsweise können auch metallische Materialien zugemischt werden, insbesondere im Sinne einer Armierung oder Verstärkung oder Versteifung oder Verfestigung oder Strukturierung des Einsatzmaterials. Hierdurch können wahlweise auch unterschiedliche Härtegrade oder Kraftfluss-Linien/-Bereiche im zu erstellenden Bauwerk generiert/vorgegeben werden.

Gemäß einer Ausführungsform wird das Einsatzmaterial auf dem Materialflusspfad vom Boden bis zur erhöhten Materialabgabestelle (definiert durch die Materialverteileinrichtung) an drei Materialübergabestellen kontinuierlich übergeben, nämlich: an einer ersten Materialübergabestelle zwischen einer in Höhenrichtung fördernden (ersten) Fördereinrichtung und einer zumindest annähernd horizontal entlang der Rahmenstruktur fördernden (zweiten) Fördereinrichtung, an einer zweiten Materialübergabestelle zwischen der horizontal fördernden Fördereinrichtung und einer weiteren zumindest annähernd horizontal entlang der Rahmenstruktur fördernden (dritten) Fördereinrichtung, und an einer dritten Materialübergabestelle von der weiteren horizontal fördernden Fördereinrichtung zur Materialverteileinrichtung. Die Materialübergabestellen können dabei wahlweise auch eine Puffer-Funktion liefern, z.B. mittels dort angeordneter Bunker. Dank der Mehrzahl von Materialübergabestelle kann ein kontinuierlicher oder quasi-kontinuierlicher Materialfluss auf flexible Weise gesteuert und an den Baufortschritt angepasst werden, z.B. auch bei Fehlerzuständen oder kurzzeitiger Unterbrechung des Auftragens und Verdichtens.

Die drei Materialübergabestellen können dabei allesamt durch die Materialzufuhreinrichtung bereitgestellt sein/werden. Die Materialübergabe erfolgt bevorzugt auf kontinuierliche Weise.

Gemäß einer Ausführungsform wird das Einsatzmaterial in Horizontalstreifen, die über die Arbeitsbreite nacheinander in Vortriebsrichtung aneinander gereiht sind, aufgetragen, verteilt und verdichtet (insbesondere mäanderförmig), insbesondere auf bidirektionalen Bewegungspfaden in Breitenrichtung über die gesamte Arbeitsbreite, insbesondere abwechselnd hin und her. Dies erleichtert auch die Systematisierung des Prozesses und damit die Rückverfolgung und Dokumentation.

Gemäß einer Ausführungsform wird zunächst in einer ersten Phase ein erster Abschnitt des Damms über die gesamte Soll-Höhe des Damms errichtet, insbesondere über wenigstens vier Höhenebene bzw. in wenigstens vier Schichten, und daraufhin wird in einer zweiten Phase ein weiterer Abschnitt über die Soll-Höhe errichtet, insbesondere entlang der gesamten Längserstreckung der Einsatzmaterialverarbeitungsvorrichtung, insbesondere mit zueinander in den jeweiligen Schichten/Höhenebenen in Vortriebsrichtung/Längsrichtung versetzten Horizontalstreifen, insbesondere bei Vortrieb mittels eines/des Chassis ausschließlich zwischen den Phasen.

Die zuvor genannte Aufgabe wird erfindungsgemäß auch durch eine Steuerungseinrichtung eingerichtet zum Ausführen eines zuvor beschriebenen Verfahrens, wobei die Steuerungseinrichtung zumindest an die Materialzufuhreinrichtung, an die Materialverteileinrichtung und an die Verdichtungseinrichtung gekoppelt ist, insbesondere Steuerungseinrichtung eingerichtet zur Regelung des Materialflusses und der Bewegungspfade an wenigstens den drei Komponenten Materialzufuhreinrichtung, Materialverteileinrichtung und Verdichtungseinrichtung in Abhängigkeit voneinander. Hierdurch ergeben sich zuvor genannte Vorteile.

Die zuvor genannte Aufgabe wird erfindungsgemäß auch durch Verwendung einer Einsatzmaterialverarbeitungsvorrichtung zum Auftragen, Verteilen und Verdichten von Einsatzmaterial in definierten/definierbaren Schichthöhen, insbesondere einer zuvor beschriebenen Einsatzmaterialverarbeitungsvorrichtung, für den Damm-, Deich- und/oder Straßenbau, wobei wenigstens eine Verdichtungseinrichtung und wenigstens eine Materialverteileinrichtung in Abhängigkeit voneinander angesteuert und derart positionsgeregelt werden, dass das Einsatzmaterial in der jeweiligen Schicht in einem kombinierten Prozess auf einem geregelten Bewegungspfad der Materialverteileinrichtung und der Verdichtungseinrichtung sowohl aufgetragen als auch verdichtet wird. Hierdurch ergeben sich zuvor genannte Vorteile.

Auch bei einer derartigen Anordnung ist ein Portal-Aufbau mit einer das zu errichtende Bauwerk komplett überspannenden Rahmenstruktur insbesondere beim Deichbau vorteilhaft, jedoch nicht notwendiger Weise erforderlich.

Gemäß einem Ausführungsbeispiel kann das Fahrwerk Bestandteil eines Chassis umfassend wenigstens ein erstes und wenigstens ein zweites Fahrwerk sein, wobei die Rahmenstruktur an dem ersten und zweiten Fahrwerk abgestützt ist und eine Spannbreite der Einsatzmaterialverarbeitungsvorrichtung definiert und zwischen den Fahrwerken eine Arbeitsbreite für die Materialverteileinrichtung und die Verdichtungseinrichtung bereitstellt, welche jeweils an der Rahmenstruktur innerhalb der Arbeitsbreite verlagerbar sind. Hierdurch kann eine ursprünglich einseitige Ausgestaltung zu einer Portal-Ausgestaltung umfunktioniert werden, analog zu der zuvor bereits beschriebenen Abwandlung gemäß dem ersten Aspekt.

Gemäß einem Ausführungsbeispiel weist die wenigstens eine 3D-Druckeinheit eine Temperier-Einheit und/oder eine Druckerzeugungseinheit auf. Hierdurch kann eine optionale Material(nach)behandlung erfolgen, je nach Art des verwendeten Einsatzmaterials. Hierdurch kann auch ein Verdichtungsprozess begünstigt werden.

Eine Temperier-Einheit und/oder eine Druckerzeugungseinheit können auch unabhängig von einer 3D-Druckeinheit bereitgestellt werden.

Die Verdichtbarkeit der Einsatzmaterialien ist z.B. vom Wassergehalt abhängig. Optional kann eine Temperierung z.B. im Zusammenhang mit Bauarbeiten erfolgen, welche zu Zeiten erfolgen müssen, bei welchen die Außen-Temperaturen im Bereich des Gefrierpunktes liegen. Das Einsatzmaterial kann dann vortemperiert werden. Hierdurch kann z.B. auch das Errichten von Bauwerken zu kritischen Zeiten erleichtert werden, z.B. im Notfall in Katastrophensituationen oder zur Abwendung von Sturmfluten im Winter.

Gemäß einem Ausführungsbeispiel weist die wenigstens eine 3D-Druckeinheit eine Zufuhr für Additive oder zusätzliches Bei-Material auf, insbesondere einen Mischer. Hierdurch können weitere Prozessparameter eingestellt werden.

Eine Zufuhr für Additive kann auch unabhängig von einer 3D-Druckeinheit bereitgestellt werden.

Beispielsweise kann Wasser zugesetzt werden. Die Zuführeinrichtung für Additive kann wahlweise auch wenigstens eine Düse aufweisen und an den Materialflusspfad gekoppelt sein, insbesondere stromauf von der Verdichtungseinheit.

Weitere Merkmale und Vorteile der Erfindung ergeben sich aus der Beschreibung wenigstens eines Ausführungsbeispiels anhand von Zeichnungen, sowie aus den Zeichnungen selbst. Dabei zeigt jeweils in schematischer Darstellung
Fig. 1 in einer Seitenansicht den Aufbau einer Einsatzmaterialverarbeitungsvorrichtung gemäß einem Ausführungsbeispiel;
Fig. 2A, 2B in Draufsichten eine Materialverteileinrichtung einer Einsatzmaterialverarbeitungsvorrichtung;
Fig. 3A, 3B, 4A, 4B in Seitenansichten und in einer Draufsicht eine Materialverteileinrichtung und eine Verdichtungseinrichtung einer Einsatzmaterialverarbeitungsvorrichtung;
Fig. 6 in eine Seitenansicht eine Verdichtungseinrichtung einer Einsatzmaterialverarbeitungsvorrichtung in einer Anordnung auf dem Boden bzw. auf der zu verdichtenden Schicht in der entsprechenden Höhenebene;
Fig. 7, 8 jeweils in einer perspektivischen Ansicht eine Einsatzmaterialverarbeitungsvorrichtung gemäß einem weiteren Ausführungsbeispiel;
Fig. 9A in einer Draufsicht eine Einsatzmaterialverarbeitungsvorrichtung gemäß einem weiteren Ausführungsbeispiel;
Fig. 9B in einer Seitenansicht eine vorteilhafte Art und Weise des Erstellens eines Bauwerks in Schichten und Horizontalstreifen, gemäß einer Ausführungsform;
Fig. 10A, 10B, 11A, 11B, 12A, 12B in drei unterschiedlichen Perspektiven (2x Seitenansicht, 1x Draufsicht) eine Einsatzmaterialverarbeitungsvorrichtung gemäß einem weiteren Ausführungsbeispiel;
Fig. 13 eine vorteilhafte Abfolge eines Verfahrens gemäß einer Ausführungsform.

Bei Bezugszeichen, die nicht explizit in Bezug auf eine einzelne Figur beschrieben werden, wird auf die anderen Figuren verwiesen.

Die Figuren werden zwecks leichteren Verständnisses zunächst zusammen unter Bezugnahme auf alle Bezugszeichen beschrieben. In den jeweiligen Figuren gezeigte Einzelheiten oder Besonderheiten werden individuell beschrieben.

Zum Errichten eines Damms oder Deichs oder Bauwerks 3 auf dem Boden 80 wird Einsatzmaterial 1 verwendet, welches bevorzugt in einzelnen Horizontalstreifen 2 aufgetragen und verdichtet wird. Das Bauwerk entsteht dann in einzelnen Horizontalabschnitten 3.1, 3.2,... , 3.12, 3.n, insbesondere in z.B. fünf oder sechs Horizontalabschnitten je Höhenebene zn (hier je Ebene sechs Horizontalabschnitte).

Zunächst muss das Einsatzmaterial zum Bauplatz gelangen. Dafür können Materialtransporteinheiten, insbesondere Trucks 4 eingesetzt werden (insbesondere chargenweise Anlieferung). Mittels einer Materialzufuhreinheit 5, insbesondere Bandschleifenwagen, kann das Einsatzmaterial dann zur Verarbeitung einer/der Einsatzmaterialverarbeitungsvorrichtung 10 zugeführt werden.

Die Einsatzmaterialverarbeitungsvorrichtung 10 umfasst ein Chassis 20 mit wenigstens einem Fahrwerk, insbesondere mit einem ersten Fahrwerk 21, insbesondere Raupenfahrwerk, und einem weiteren (zweiten) Fahrwerk 22, insbesondere Raupenfahrwerk. Es können mehrere (erste, zweite) Fahrantriebe 23, 24 vorgesehen sein, jeweils für eines der Fahrwerke. Eine Rahmenstruktur 30 mit wenigstens einer Stütze, insbesondere mit einer ersten Stütze 31, insbesondere in vertikaler Ausrichtung, und mit wenigstens einer weiteren (zweiten) Stütze 32, insbesondere in vertikaler Ausrichtung, bevorzugt jeweils mit Höhenverstellung 33 mit insbesondere hydraulischem Antrieb/Aktuator 34, liefert eine Abstützung für einen Querträger 35 (Tragstruktur bzw. Komponente davon), an welchem über Befestigungsmittel 37 wenigstens ein/e Werkzeug/Einrichtung verlagerbar gelagert ist, insbesondere für translatorische Relativbewegung. Dabei kann die Rahmenstruktur 30 modular aus einzelnen modularen Rahmenelementen 36 aufgebaut sein. Die Rahmenstruktur 30 kann ferner einen oder mehrere Längsträger 38 aufweisen. An der Rahmenstruktur 30 können eine oder mehrere Führung 39, insbesondere translatorische Führungen vorgesehen sein, insbesondere auch zur Lagerung von Materialflussmodulen.

Eine Materialzufuhreinrichtung 40 stellt den Materialfluss von den Materialtransporteinheiten 4 bis zur Auftragsstelle sicher und umfasst in einem der hier gezeigten Ausführungsbeispiele eine erste, zweite und dritte Fördereinrichtung 41, 42, 43, insbesondere jeweils in Ausgestaltung als Förderband, sowie eine erste, zweite und dritte Fördereinheit 44, 45, 46, insbesondere in Ausgestaltung als Transportwagen (Trolley) oder Bandschleifenwagen. Eine weitere Fördereinheit 47 kann insbesondere als Schneckenförderer ausgestaltet sein und für den Materialfluss an der Auftragsstelle vorgesehen sein. Ferner kann eine höhenverstellbare Materialrutsche 48 vorgesehen sein.

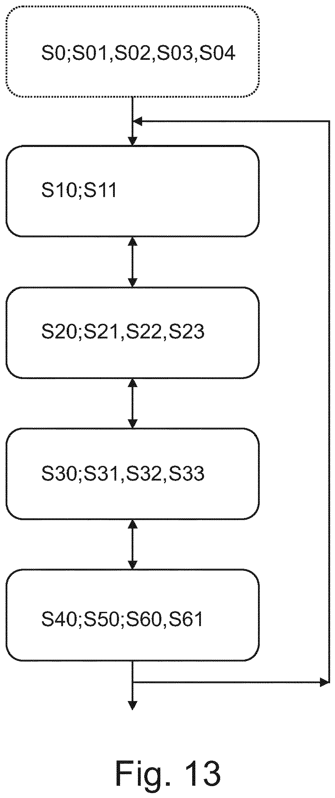

Eine Materialverteileinrichtung 50 stellt das Verteilen des Materials in der Auftragsstelle sicher und umfasst wenigstens eine Winde 51 und Zugmittel 52 sowie eine Materialverteileinheit 53, insbesondere in Ausgestaltung als oder mit einer 3D-Druckeinheit 55. Mittels eines Drehmechanismus 54 kann eine Ausrichtung der verdichtenden Einheiten eingestellt, optimiert oder auch zyklisch kontinuierlich verstellt werden (Stichwort: Hundegang). Steuerungs-Schritte für einen Hundegang werden z.B. in Fig. 13 veranschaulicht (insbesondere S23,S31,S32,S33).

Eine Verdichtungseinrichtung 60 stellt das Verdichten des Materials sicher, insbesondere direkt in der Auftragsstelle bzw. knapp davor und/oder dahinter, und umfasst einen Drehantrieb 61 bzw. eine Lenkeinrichtung, wenigstens eine Verdichtungseinheit 63, insbesondere in Ausgestaltung als Vibrationsroller oder Verdichtungswalze, einen Grader 65 und wenigstens einen Antrieb 66 für autonomen Vortrieb der Verdichtungseinrichtung.

Eine Steuerungseinrichtung 70 zur Steuerung/Regelung des Verfahrens ist an wenigstens einen Sensor 71 gekoppelt und umfasst eine Materialfluss-Steuerungseinheit 73 und ist eingerichtet zum Ansteuern wenigstens eines auf dem Materialflusspfad angeordneten Gelenks 75 oder der entsprechenden Schwenkachse.

Die Materialübergabe kann insbesondere an drei Übergabestellen erfolgen, insbesondere jeweils bei kontinuierlichem Materialfluss: erste Materialübergabestelle P1, zweite Materialübergabestelle P2, dritte Materialübergabestelle P3.

Das Verfahren kann durch die folgenden Schritte beschrieben werden:
S0 Materialfluss von P1 bis P3
S01 Materialübergabe in P1, insbesondere durch kontinuierliches Schütten
S02 Materialübergabe in P2, insbesondere durch kontinuierliches Schütten
S03 Materialübergabe in P3, insbesondere durch kontinuierliches Schütten
S04 Regeln des Materialdurchsatzes beim Fördern
S10 Auftragen von Einsatzmaterial
S11 Regeln des Materialdurchsatzes beim Auftragen des Einsatzmaterials
S20 Verdichten von Einsatzmaterial
S21 Verdichten vor der Auftragestelle für Einsatzmaterial
S22 Verdichten nach der Auftragestelle für Einsatzmaterial
S23 Aktuieren, insbesondere Antreiben/Drehen, wenigstens einer Verdichtungseinheit
S30 Vortrieb von Materialverteileinrichtung und Verdichtungseinrichtung
S31 Vortrieb in Breitenrichtung
S32 Vortrieb in Arbeitsrichtung
S33 Einstellen des Bewegungspfades der Verdichtungseinheit
S40 Höhenpositionierung und Höhenjustage
S41 Neigungskompensation
S50 Einstellen von Auftragsrichtung und/oder Längsversatz
S60 Vortrieb durch Chassis (Fahrantrieb) in Arbeitsrichtung
S61 Vortrieb gemäß vordefiniertem Längsabschnitt des zu errichtenden Bauwerks

Im Folgenden werden Länge- und Größenangaben erläutert:
Breitenrichtung x, Arbeitsrichtung bzw. Vortriebsrichtung y, Höhe bzw. Höhenrichtung z(insbesondere Vertikale bzw. Schwerkraftrichtung). Die Spannbreite x1 der Vorrichtung ist größer als die Arbeitsbreite x2 der Vorrichtung. Die Länge y1 der Vorrichtung kann in Hinblick auf das zu erstellende Bauwerk gewählt werden. Die Längserstreckung y2 der Materialverteileinrichtung/Materialverteileinheit ermöglicht eine Definition der Breite von Horizontalstreifen, welche mittels der Materialverteileinrichtung auftragbar sind.

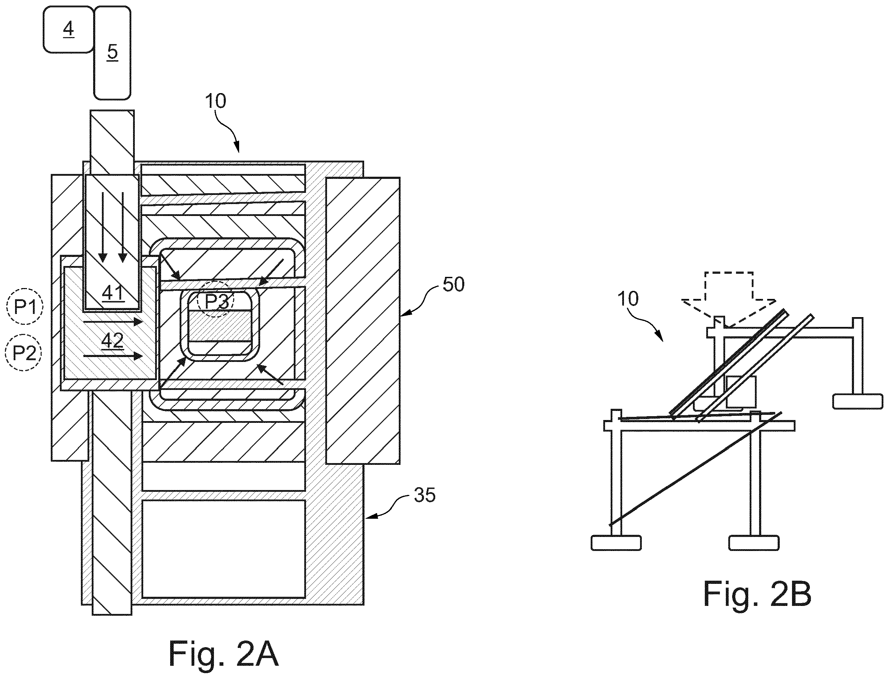

Die Fig. 2B, 3B, 4B, 10B, 11B, 12B verdeutlichen jeweils die Perspektive auf die in den entsprechenden Figuren 2A, 3A, 4A, 10A, 11A, 12A gezeigten Vorrichtungen.

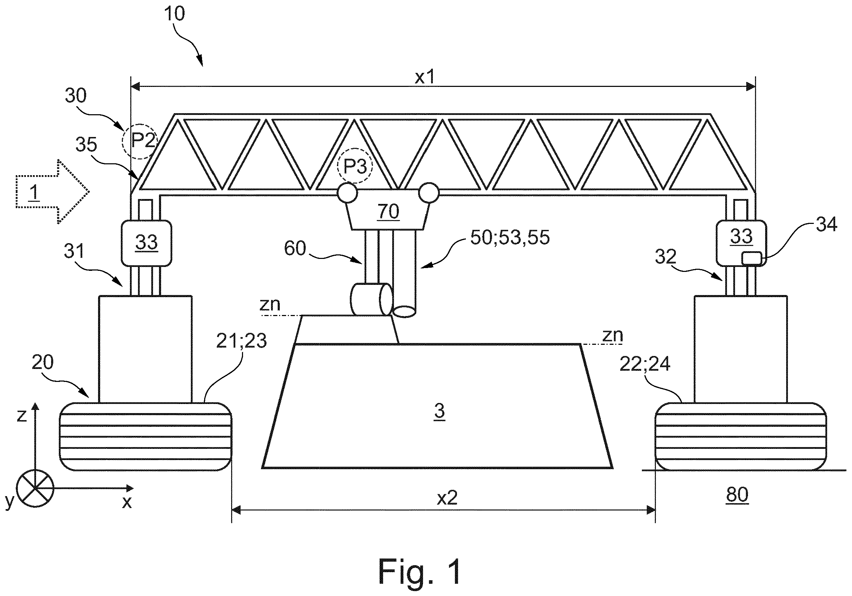

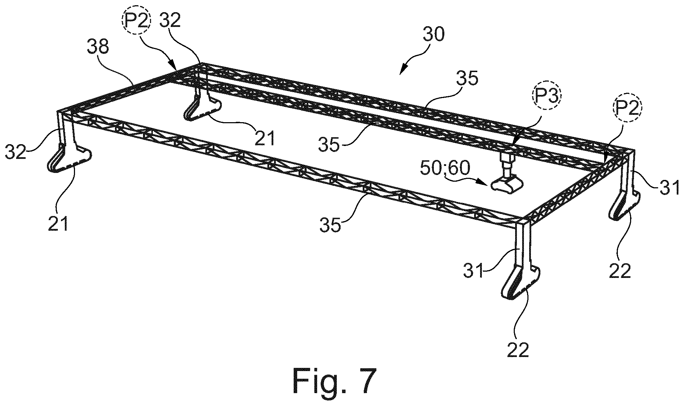

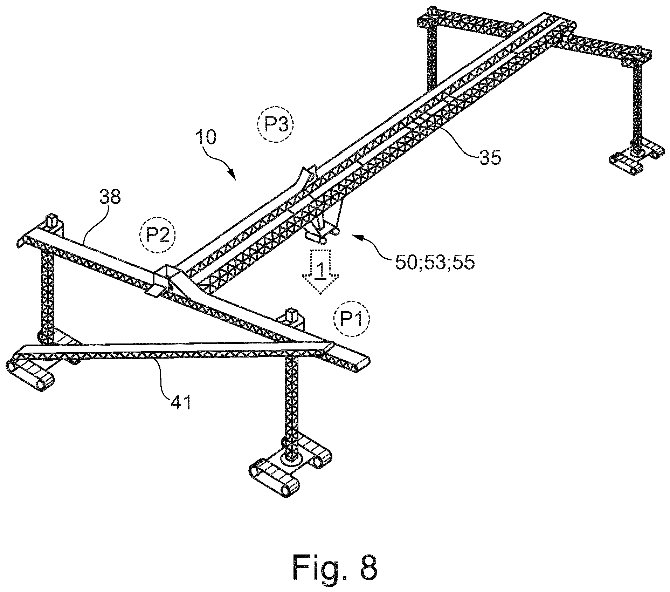

Die Fig. 1 zeigt eine über eine Spannbreite x1 errichtete Rahmenstruktur 30 mit einem oder mehreren Querträgern 35, die auf zwei oder vier Stützen 31,32 jeweils in einem Fahrwerk 21,22 abgestützt ist/sind. Auch die Fig. 7,8 zeigen einen solchen konstruktiven Aufbau, jeweils mit zwei gegenüberliegenden, sich zumindest annähernd parallel zueinander erstreckenden Längsträgern 38.

Die Fig. 2A zeigt eine Lagerung der Materialverteileinrichtung 50 in einer die Rahmenstruktur 35 umgreifenden Anordnung. Dies liefert auch hohe Sicherheit und kann die Lagerung auch hinsichtlich hoher Trägheitsmomente stabil ausgestalten.

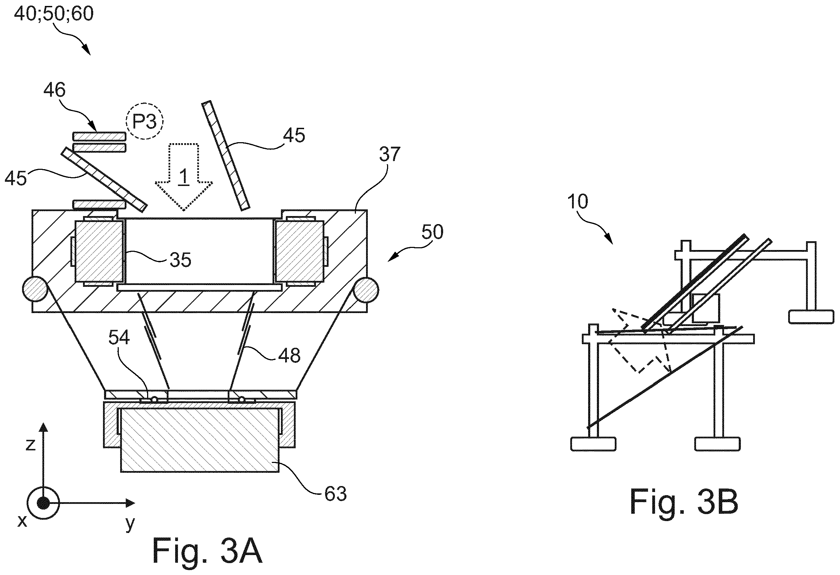

Die Fig. 3A zeigt eine Funktionsintegration von Materialverteileinrichtung 50 und Verdichtungseinrichtung 60, wobei die höhenverstellbare Kopplung insbesondere über Zugmittel 52 in einer zentrischen Anordnung unterhalb der Materialrutsche 48 erfolgt.

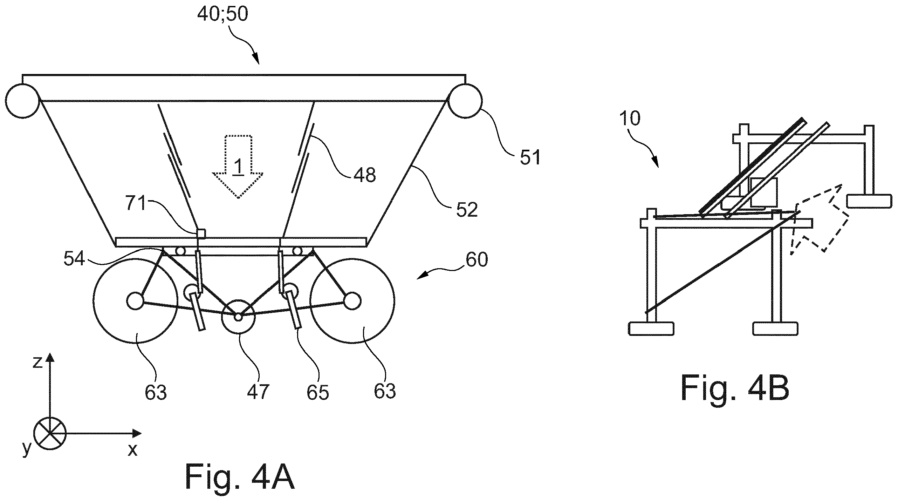

Die Fig. 4A zeigt eine Verdichtungseinrichtung 60 umfassend zwei mittels eines Drehmechanismus 54 drehbar jeweils um eine individuelle Drehachse gelagerten Verdichtungseinheiten 63 in Ausgestaltung als Walzen, wobei der Verteilungs- und Verdichtungs-Prozess mittels eines Schneckenförderers 47 und einem oder mehreren Gradern 65 regelbar ist.

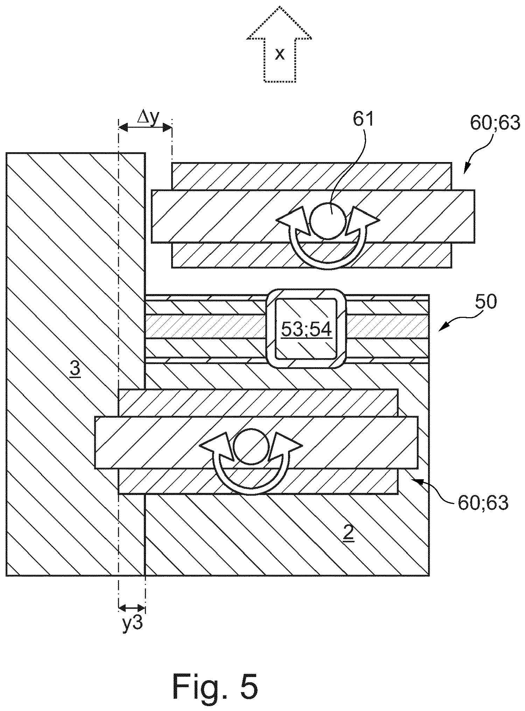

In Fig. 5 wird eine Überlappung y3 der einen Walze 63 in Vorschubrichtung y veranschaulicht. Der Bewegungspfad der Verdichtungseinrichtung ist in Richtung x ausgerichtet. Relativ zueinander sind die beiden Verdichtungseinheiten 63 mit einem Versatz Δy zueinander angeordnet, der größer ist als die Überlappung y3.

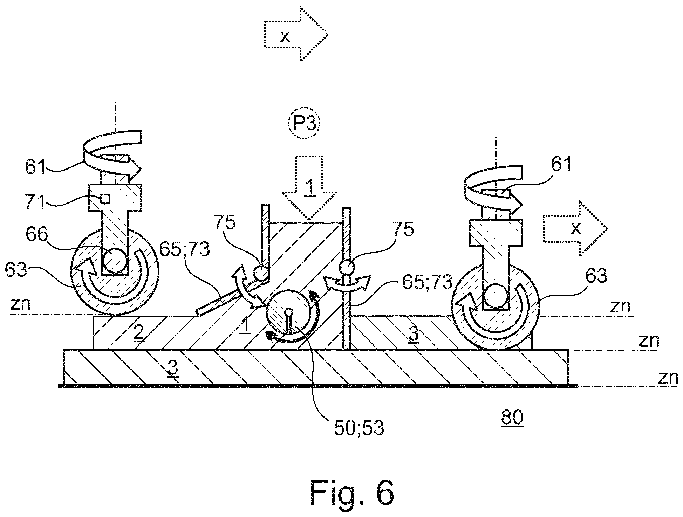

In Fig. 6 sind im Einzelnen die Drehantriebe 61 und Antriebe 66 der Verdichtungseinheiten 63 gezeigt. Auf dem Materialflusspfad ist eine Materialverteileinheit 53 angeordnet, z.B. in Ausgestaltung als Schneckenförderer. Das Auftragen des Materials kann mittels Gradern 65 bzw. mittels um wenigstens ein Gelenk 75 gelagerter Materialfluss-Steuerungseinheiten 73 geregelt werden.

Die in Fig. 7 gezeigte Anordnung ist durch einen symmetrischen Aufbau mit rechteckiger Grundfläche und vier Fahrwerken gekennzeichnet. Die Längserstreckung der Träger 38 liegt im Bereich von ca. einem Drittel der Erstreckung der beiden gegenüberliegenden Querträger 35 in Breitenrichtung. Die Materialverteileinrichtung 50 und die Verdichtungseinrichtung 60 sind an einem weiteren Querträger 35 dazwischen angeordnet, welcher in Längsrichtung verlagerbar ist. In Fig. 8 ist eine vergleichbare Anordnung gezeigt, jedoch mit nur einem Querträger 35.

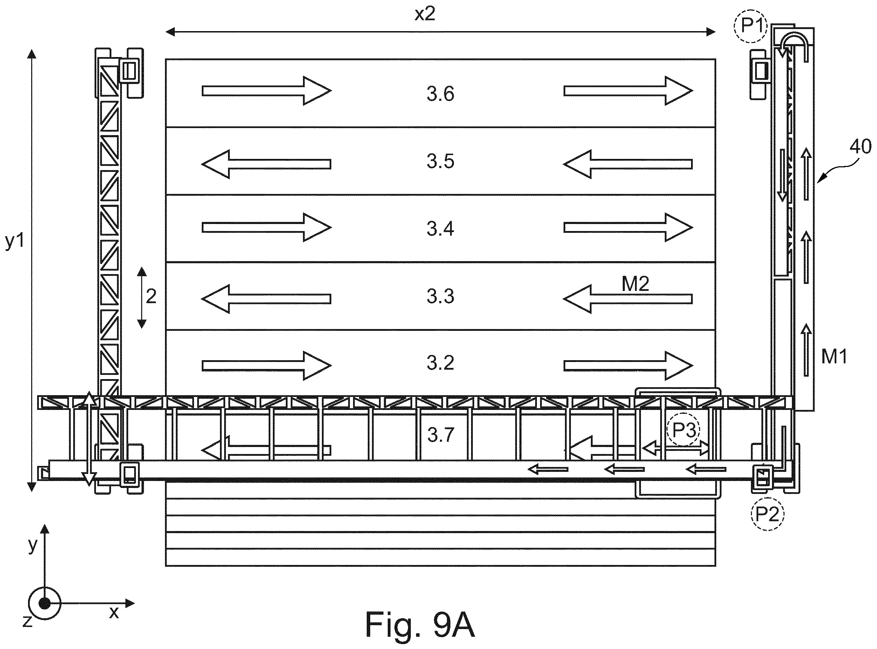

In Fig. 9A ist der Materialflusspfad M1 bis zur Auftragsstelle veranschaulicht, und der durch den Bewegungspfad der Materialverteileinrichtung definierte Materialflusspfad M2 wird ebenfalls veranschaulicht: Der Bewegungspfad M2 der Materialverteileinrichtung ist hier mäanderförmig, mit matrixartig angeordneten Umkehrpunkten zwischen jeweils unidirektionalen, insbesondere eindimensionalen Bewegungen.

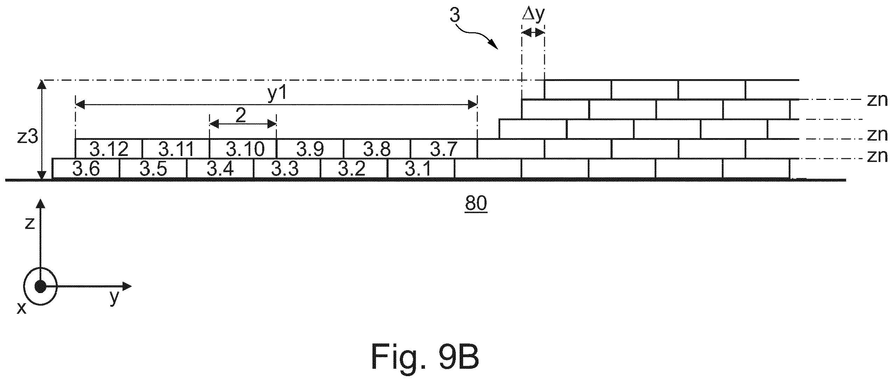

In Fig. 9B sind einzelne jeweils in der gewünschten Schichtdicke aufgetragene Horizontalstreifen 2 bzw. Horizontalabschnitte 3.1,...,3.6 und 3.7,...,3.12 veranschaulicht. Über der Soll-Höhe z3 des Bauwerks werden in diesem Beispiel fünf einzelne Höhenpositionen zn vorgesehen, zwischen welchen jeweils ein y-Versatz realisiert wird, z.B. ein y-Versatz entsprechend der halben Breite der Horizontalabschnitte.

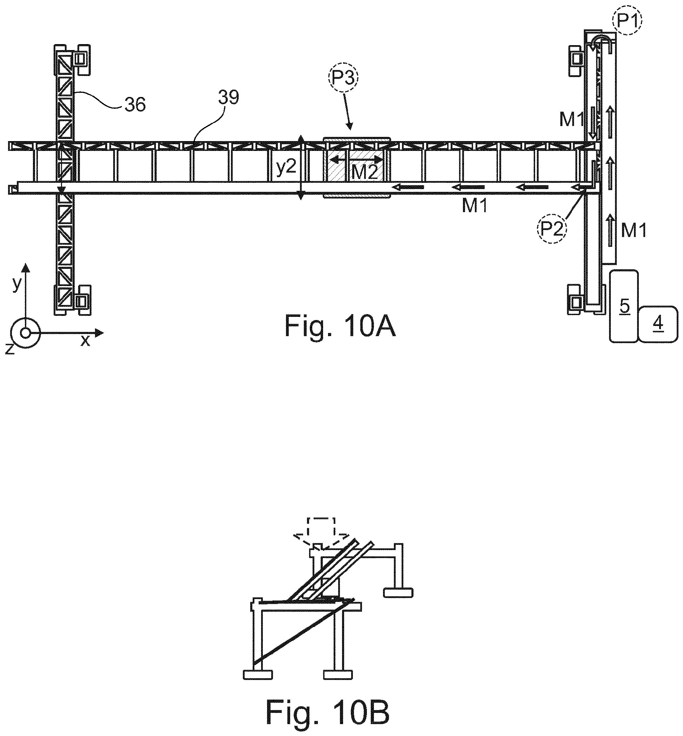

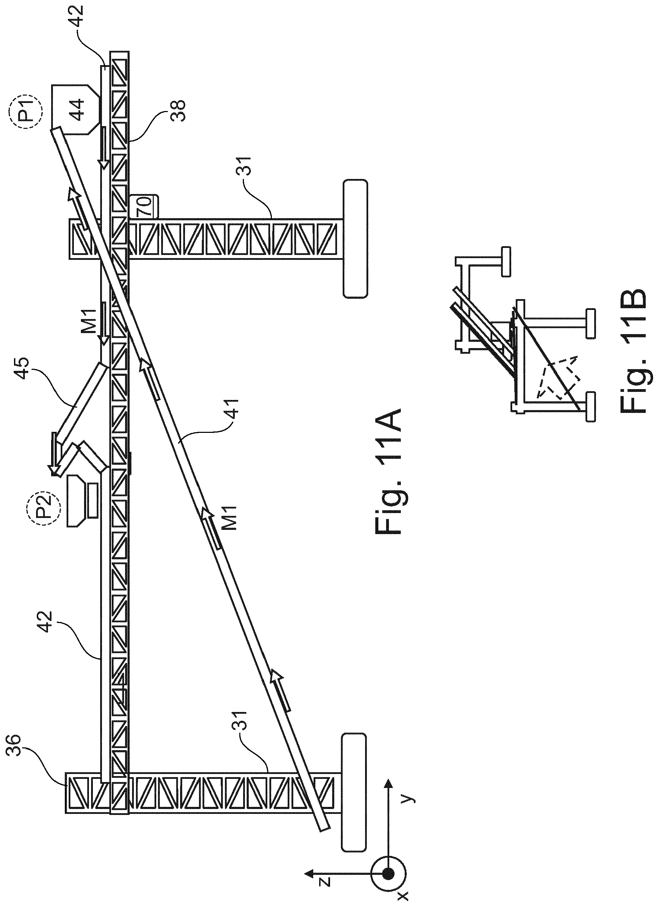

In Fig. 10A,11A wird der Materialfluss am Beispiel einer Konstruktion gemäß Fig. 8 veranschaulicht. Die Längserstreckung y2 liegt z.B. im Bereich von 2m bis 5m. An den drei Materialübergabestellen P1, P2, P3 erfolgt jeweils eine Richtungsumkehr bzw. Richtungsänderung des Bewegungspfades und wahlweise auch eine Materialpufferung. Ein Materialtransport in Höhenrichtung nach oben muss dabei nur bis zur ersten Materialübergabestelle P1 erfolgen. Weitere Abschnitte des Materialflusspfades sind im Wesentlichen horizontal (zumindest annähernd) auf derselben Höhenebene ausgerichtet (abgesehen von etwaigen gewünschten Höhenunterschieden an den Übergabestellen P2,P3).

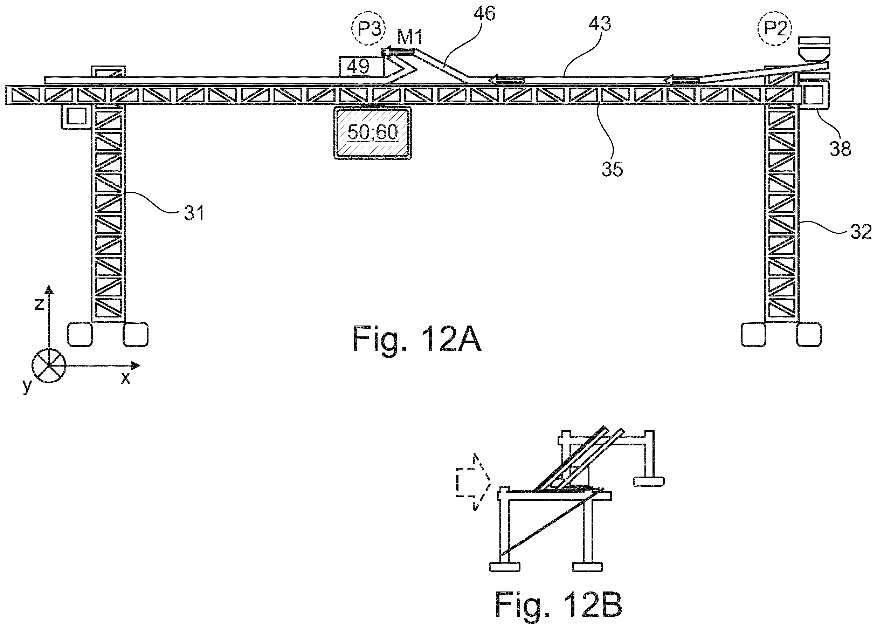

In Fig. 12A ist ferner eine Materialflusseinheit 49 gezeigt, insbesondere in Ausgestaltung als Materialrutsche und/oder Bunker, mittels welcher der Materialfluss geregelt bzw. aus ausgerichtet und/oder gepuffert werden kann. Entsprechende Materialflusseinheiten 49 können auch an weiteren Materialübergabestellen (P1,P2) vorgesehen sein.

In der Fig. 13 wird allgemein eine Arbeitsweise beschrieben, bei/mittels welcher eine Materialverteileinrichtung und wenigstens eine Verdichtungseinheit (bzw. deren Bewegungspfade) in Abhängigkeit voneinander und in Abhängigkeit des Materialflusses steuerbar sind. Der Bewegungspfad der jeweiligen Verdichtungseinheit kann dabei dem Bewegungspfad der Materialverteileinrichtung entsprechen, und kann optional auf diesem Bewegungspfad weiter differenziert werden (optionale situationsbedingte Richtungs/Neigungskompensation).

### Bezugszeichenliste:

- 1: Einsatzmaterial
- 2: Horizontalstreifen
- 3: Damm oder Deich
- 3.1, 3.2,..., 3.12, 3.n: Horizontalabschnitt
- 4: Materialtransporteinheit, insbesondere Truck
- 5: Materialzufuhreinheit, insbesondere Bandschleifenwagen

- 10: Einsatzmaterialverarbeitungsvorrichtung
- 20: Chassis
- 21: (erstes) Fahrwerk, insbesondere Raupenfahrwerk
- 22: weiteres (zweites) Fahrwerk, insbesondere Raupenfahrwerk
- 23: (erster) Fahrantrieb
- 24: weiterer (zweiter) Fahrantrieb
- 30: Rahmenstruktur
- 31: (erste) Stütze, insbesondere in vertikaler Ausrichtung
- 32: weitere (zweite) Stütze, insbesondere in vertikaler Ausrichtung
- 33: Höhenverstellung
- 34: Antrieb/Aktuator für Höhenverstellung, insbesondere hydraulisch
- 35: Träger, insbesondere Querträger (Komponente der Tragstruktur)
- 36: modulares Rahmenelement
- 37: Befestigungsmittel für wenigstens ein/e Werkzeug/Einrichtung, insbesondere für translatorische Relativbewegung
- 38: Längsträger
- 39: Führung, insbesondere translatorische Führung
- 40: Materialzufuhreinrichtung
- 41: (erste) Fördereinrichtung, insbesondere Förderband
- 42: weitere (zweite) Fördereinrichtung, insbesondere Förderband
- 43: weitere (dritte) Fördereinrichtung, insbesondere Förderband
- 44: (erste) Fördereinheit, insbesondere Transportwagen (Trolley)
- 45: weitere (zweite) Fördereinheit, insbesondere Bandschleifenwagen
- 46: weitere (dritte) Fördereinheit, insbesondere Bandschleifenwagen
- 47: weitere (vierte) Fördereinheit, insbesondere Schneckenförderer
- 48: höhenverstellbare Materialrutsche
- 49: Materialflusseinheit
- 50: Materialverteileinrichtung
- 51: Winde
- 52: Zugmittel
- 53: Materialverteileinheit
- 54: Drehmechanismus
- 55: 3D-Druckeinheit
- 60: Verdichtungseinrichtung
- 61: Drehantrieb bzw. Lenkung bzw. Lenkeinrichtung
- 63: Verdichtungseinheit, insbesondere Vibrationsroller oder Verdichtungswalze
- 65: Grader
- 66: Antrieb für autonomen Vortrieb der Verdichtungseinrichtung
- 70: Steuerungseinrichtung
- 71: Sensor
- 73: Materialfluss-Steuerungseinheit
- 75: Gelenk oder Schwenkachse
- 80: Boden

- M1: Materialflusspfad bis zur Auftragsstelle
- M2: Materialflusspfad definiert durch Bewegungspfad der Materialverteileinrichtung

- P1: erste Materialübergabestelle, insbesondere kontinuierlicher Materialfluss
- P2: zweite Materialübergabestelle, insbesondere kontinuierlicher Materialfluss
- P3: dritte Materialübergabestelle, insbesondere kontinuierlicher Materialfluss
- S0: Materialfluss von P1 bis P3
- S01: Materialübergabe in P1, insbesondere durch kontinuierliches Schütten
- S02: Materialübergabe in P2, insbesondere durch kontinuierliches Schütten
- S03: Materialübergabe in P3, insbesondere durch kontinuierliches Schütten
- S04: Regeln des Materialdurchsatzes beim Fördern
- S10: Auftragen von Einsatzmaterial
- S11: Regeln des Materialdurchsatzes beim Auftragen des Einsatzmaterials
- S20: Verdichten von Einsatzmaterial
- S21: Verdichten vor der Auftragestelle für Einsatzmaterial
- S22: Verdichten nach der Auftragestelle für Einsatzmaterial
- S23: Aktuieren, insbesondere Antreiben/Drehen, wenigstens einer Verdichtungseinheit
- S30: Vortrieb von Materialverteileinrichtung und Verdichtungseinrichtung
- S31: Vortrieb in Breitenrichtung
- S32: Vortrieb in Arbeitsrichtung
- S34: Einstellen des Bewegungspfades der Verdichtungseinheit
- S40: Höhenpositionierung und Höhenjustage
- S50: Einstellen von Auftragsrichtung und/oder Längsversatz
- S60: Vortrieb durch Chassis (Fahrantrieb) in Arbeitsrichtung
- S61: Vortrieb gemäß vordefiniertem Längsabschnitt des zu errichtenden Bauwerks

- x: Breite bzw. Breitenrichtung
- x1: Spannbreite der Vorrichtung
- x2: Arbeitsbreite der Vorrichtung
- y: Arbeitsrichtung bzw. Vortriebsrichtung
- y1: Länge der Vorrichtung
- y2: Längserstreckung der Materialverteileinrichtung/Materialverteileinheit
- y3: Überlappung
- Δy: Versatz Verdichtungseinheiten bzw. Versatz Horizontalstreifen
- z: Höhe bzw. Höhenrichtung (insbesondere Vertikale bzw. Schwerkraftrichtung)
- z3: Soll-Höhe Damm bzw. Bauwerk
- zn: einzelne Höhenposition
- S03: Materialübergabe in P3, insbesondere durch kontinuierliches Schütten
- S04: Regeln des Materialdurchsatzes beim Fördern
- S10: Auftragen von Einsatzmaterial
- S11: Regeln des Materialdurchsatzes beim Auftragen des Einsatzmaterials
- S20: Verdichten von Einsatzmaterial
- S21: Verdichten vor der Auftragestelle für Einsatzmaterial
- S22: Verdichten nach der Auftragestelle für Einsatzmaterial
- S23: Aktuieren, insbesondere Antreiben/Drehen, wenigstens einer Verdichtungseinheit
- S30: Vortrieb von Materialverteileinrichtung und Verdichtungseinrichtung
- S31: Vortrieb in Breitenrichtung
- S32: Vortrieb in Arbeitsrichtung
- S34: Einstellen des Bewegungspfades der Verdichtungseinheit
- S40: Höhenpositionierung und Höhenjustage
- S41: Neigungskompensation
- S50: Einstellen von Auftragsrichtung und/oder Längsversatz
- S60: Vortrieb durch Chassis (Fahrantrieb) in Arbeitsrichtung
- S61: Vortrieb gemäß vordefiniertem Längsabschnitt des zu errichtenden Bauwerks

- x: Breite bzw. Breitenrichtung
- x1: Spannbreite der Vorrichtung
- x2: Arbeitsbreite der Vorrichtung
- y: Arbeitsrichtung bzw. Vortriebsrichtung
- y1: Länge der Vorrichtung
- y2: Längserstreckung der Materialverteileinrichtung/Materialverteileinheit
- y3: Überlappung
- Δy: Versatz Verdichtungseinheiten bzw. Versatz Horizontalstreifen
- z: Höhe bzw. Höhenrichtung (insbesondere Vertikale bzw. Schwerkraftrichtung)
- z3: Soll-Höhe Damm bzw. Bauwerk
- zn: einzelne Höhenposition

## Patentansprüche

1. Einsatzmaterialverarbeitungsvorrichtung (10) eingerichtet zum Auftragen, Verteilen und Verdichten von Einsatzmaterial (1) in definierten Schichthöhen, insbesondere für den Damm, Deich- und/oder Straßenbau, wobei die Einsatzmaterialverarbeitungsvorrichtung (10) aufweist:
- ein Chassis (20) mit wenigstens einem Fahrantrieb (23, 24) und wenigstens einem Fahrwerk (21, 22), wobei das Fahrwerk (21, 22) Bestandteil eines Chassis (20) umfassend wenigstens ein erstes und wenigstens ein zweites Fahrwerk (21, 22) ist;
- eine Rahmenstruktur (30), wobei die Rahmenstruktur (30) an dem ersten und zweiten Fahrwerk (21,22) abgestützt ist und eine Spannbreite (x1) der Einsatzmaterialverarbeitungsvorrichtung (10) definiert und zwischen dem ersten und zweiten Fahrwerk (21,22) eine Arbeitsbreite (x2) für die Einsatzmaterialverarbeitungsvorrichtung (10) bereitstellt;
- eine an die Rahmenstruktur (30) gekoppelte oder daran abgestützte Materialzufuhreinrichtung (40);
- eine an die Materialzufuhreinrichtung (40) gekoppelte und zumindest abschnittsweise über die Arbeitsbreite (x2) insbesondere in einem zentrischen Bereich davon verlagerbare und an der Rahmenstruktur (30) gelagerte Materialverteileinrichtung (50), welche an einer Vielzahl von Auftragepositionen innerhalb der Arbeitsbreite (x2) positionierbar ist;
**dadurch gekennzeichnet, dass** die Materialverteileinrichtung (50) zum schichtweisen Auftragen des Einsatzmaterials (1) auf dem Boden (80) in unterschiedlichen vordefinierbaren Höhenpositionen innerhalb der Arbeitsbreite (x2) eingerichtet ist, wobei die Einsatzmaterialverarbeitungsvorrichtung (10) ferner aufweist:
- eine Steuerungseinrichtung (70) eingerichtet zum Ansteuern der Materialverteileinrichtung (50), insbesondere eingerichtet zum Einstellen der Schichtdicke eines schichtweise aufgetragenen Einsatzmaterials (1);
- eine verlagerbar an der Rahmenstruktur (30) und/oder an der Materialverteileinrichtung (50) gelagerte Verdichtungseinrichtung (60), welche in Materialfluss-Verbindung mit der Materialzufuhreinrichtung (40) steht, wobei die Verdichtungseinrichtung (60) eine Verdichtungswalze ist,
wobei die Spannbreite (x1) der Einsatzmaterialverarbeitungsvorrichtung (10) zwischen dem ersten und zweiten Fahrwerk (21,22) die Arbeitsbreite (x2) für die Verdichtungseinrichtung (60) bereitstellt,
wobei die Materialverteileinrichtung (50) und die Verdichtungseinrichtung (60) jeweils an der Rahmenstruktur (30) innerhalb der Arbeitsbreite (x2) verlagerbar sind;
- wobei die Steuerungseinrichtung (70) ferner eingerichtet ist zum Regeln eines/des jeweiligen Bewegungspfades der Verdichtungseinrichtung (60) und der Materialverteileinrichtung (50) in Abhängigkeit voneinander jeweils innerhalb der Arbeitsbreite (x2), wobei die Spannbreite (x1) mindestens 35 m beträgt, wobei das erste und zweite Fahrwerk (21, 22) jeweils seitlich die Arbeitsbreite (x2) nach außen begrenzen, wobei die Arbeitsbreite (x2) wenigstens 50% der Spannbreite (x1) der Einsatzmaterialverarbeitungsvorrichtung (10) beträgt, wobei die Einsatzmaterialverarbeitungsvorrichtung (10) in Bezug auf die Arbeits-/Vortriebsrichtung symmetrisch aufgebaut ist mit zwei gegenüberliegend voneinander jeweils seitlich von der Arbeitsbreite (x2) anzuordnenden/angeordneten Stützen (31, 32) mit jeweils einem Fahrwerk (21, 22).

2. Einsatzmaterialverarbeitungsvorrichtung (10) nach Anspruch 1, wobei die Verdichtungseinrichtung (60) oder wenigstens eine Verdichtungseinheit (63) der Verdichtungseinrichtung (60) drehbar gelagert ist, insbesondere um eine Hochachse (z) oder um eine im Winkel kleiner 45° zur Hochachse geneigte Drehachse, und wobei die Steuerungseinrichtung (70) ferner eingerichtet ist zum Einstellen eines Lenkausschlages der wenigstens einen Verdichtungseinheit (63) um die entsprechende Hochachse/Drehachse; und/oder wobei die Verdichtungseinrichtung (60) oder wenigstens eine Verdichtungseinheit (63) der Verdichtungseinrichtung (60) höhenverstellbar gelagert ist, und wobei die Steuerungseinrichtung (70) ferner eingerichtet ist zum Einstellen der Höhenposition (zn) oder zusätzlich auch einer Neigung der wenigstens einen Verdichtungseinheit (63).

3. Einsatzmaterialverarbeitungsvorrichtung (10) nach einem der vorhergehenden Ansprüche, wobei die Verdichtungseinrichtung (60) wenigstens zwei Verdichtungseinheiten (63) jeweils in Ausgestaltung als Verdichtungswalze aufweist.

4. Einsatzmaterialverarbeitungsvorrichtung (10) nach einem der vorhergehenden Ansprüche, wobei die Materialverteileinrichtung (50) und die Verdichtungseinrichtung (60) eingerichtet sind zum Verteilen und Verdichten des Einsatzmaterials (1) in Horizontalstreifen (2) mit vordefinierbarer Längserstreckung; und/oder wobei die Einsatzmaterialverarbeitungsvorrichtung (10) eingerichtet ist zum Auftragen, Verteilen und Verdichten des Einsatzmaterials (1) in Horizontalstreifen (2), die über die Arbeitsbreite (x2) nacheinander in Vortriebsrichtung aneinander gereiht erstellt sind, insbesondere bei jeweils translatorischer Verlagerung von Materialverteileinrichtung (50) und Verdichtungseinrichtung (60) ausschließlich in Breitenrichtung (x), insbesondere bei matrixartigem Bewegungspfad mit schrittweiser Verlagerung des/der Fahrwerks/Fahrwerke (21, 22) in Vortriebsrichtung.

5. Einsatzmaterialverarbeitungsvorrichtung (10) nach Anspruch 3 wobei die wenigstens zwei Verdichtungswalzen derart relativ zueinander positionierbar oder ausrichtbar sind, dass der/die Bewegungspfade der Verdichtungswalzen einen Hundegang abbilden.

6. Einsatzmaterialverarbeitungsvorrichtung (10) nach einem der vorhergehenden Ansprüche, wobei die Rahmenstruktur (30) wenigstens einen sich zumindest annähernd in Vorschubrichtung des Fahrantriebs (23, 24) erstreckenden Längsträger (38) aufweist, welcher sich über eine Länge entsprechend einem Vielfachen eines einzelnen zu erstellenden Horizontalstreifens (2) des zu erstellenden Bauwerks oder über eine Länge entsprechend einem Vielfachen der Längserstreckung eines/des die Materialverteileinrichtung (50) und die Verdichtungseinrichtung (60) lagernden Querträgers (35) der Rahmenstruktur (30) erstreckt.

7. Einsatzmaterialverarbeitungsvorrichtung (10) nach einem der vorhergehenden Ansprüche, wobei die Einsatzmaterialverarbeitungsvorrichtung (10) wenigstens drei Materialübergabestellen (P1,P2,P3) auf dem von der Einsatzmaterialverarbeitungsvorrichtung (10) definierten Materialflusspfad (M1, M2) von einer anliefernden Materialtransporteinheit (4) bis zur von einer Materialverteileinheit (53) der Materialverteileinrichtung (50) definierten Auftragsstelle definiert, insbesondere eine erste Materialübergabestelle (P1) von einer ersten insbesondere kontinuierlich fördernden Fördereinrichtung (41) zu einer zweiten insbesondere kontinuierlich fördernden Fördereinrichtung (42), eine zweite Materialübergabestelle (P2) von der zweiten Fördereinrichtung (42) zu einer dritten insbesondere kontinuierlich fördernden Fördereinrichtung (43), und eine dritte Materialübergabestelle (P3) von der dritten Fördereinrichtung (43) zur Materialverteileinrichtung (50).

8. Verfahren zum Auftragen, Verteilen und Verdichten von Einsatzmaterial (1) in definierten Schichthöhen, insbesondere zum Damm-, Deich- und/oder Straßenbau, mittels einer Einsatzmaterialverarbeitungsvorrichtung (10) nach einem der vorhergehenden Ansprüche, wobei das Einsatzmaterial (1) mittels einer Materialzufuhreinrichtung (40) zumindest abschnittsweise innerhalb einer Arbeitsbreite (x2) gefördert wird; wobei das Einsatzmaterial (1) mittels einer Materialverteileinrichtung (50) innerhalb der Arbeitsbreite (x2) auf dem Boden (80) aufgetragen und verteilt wird, indem die Materialverteileinrichtung (50) an einer Vielzahl von Auftragepositionen positioniert oder daran entlang verlagert wird;
**dadurch gekennzeichnet, dass** die Materialverteileinrichtung (50) zum schichtweisen Auftragen des Einsatzmaterials (1) auf dem Boden (80) in unterschiedlichen vordefinierbaren Höhenpositionen positioniert/verlagert wird, wobei die Materialverteileinrichtung (50) und eine Verdichtungseinrichtung (60) derart entlang eines/des jeweiligen Bewegungspfades der Verdichtungseinrichtung (60) und der Materialverteileinrichtung (50) in Abhängigkeit voneinander verlagert werden, dass das Einsatzmaterial (1) in den jeweiligen Höhenpositionen innerhalb der Arbeitsbreite (x2) Fahrwerken (21, 22) Schicht für Schicht sowohl aufgetragen als auch verdichtet wird.

9. Verfahren nach dem vorhergehenden Verfahrensanspruch, wobei das Einsatzmaterial (1) innerhalb der Arbeitsbreite (x2) zwischen wenigstens einem ersten und wenigstens einem zweiten Fahrwerk (21, 22) sowohl aufgetragen als auch verdichtet, wobei die Fahrwerke (21, 22) eine Rahmenstruktur (30) abstützen, welche sich über eine Spannbreite (x1) über der Arbeitsbreite (x2) erstreckt, und an welcher Rahmenstruktur (30) die Materialverteileinrichtung (50) und die Verdichtungseinrichtung (60) positioniert werden.

10. Verfahren nach einem der vorhergehenden Verfahrensansprüche, wobei die Bewegungspfade von Materialverteileinrichtung (50) und Verdichtungseinrichtung (60) als zumindest annähernd symmetrisch ausgestaltete Bewegungspfade für eine synchrone Bewegung von Materialverteileinrichtung (50) und Verdichtungseinrichtung (60) über die Arbeitsbreite (x2) eingestellt werden, insbesondere für eine rein translatorisch an der Rahmenstruktur (30) geführte Bewegung, insbesondere quer zur Vorschubrichtung (y), also quer zur gewünschten Längserstreckung des zu errichtenden Bauwerks.

11. Verfahren nach einem der vorhergehenden Verfahrensansprüche, wobei die einzelnen Höhenebenen des zu errichtenden Bauwerks bei stillstehendem Vortrieb/Fahrantrieb (23, 24) jeweils in mehreren Horizontalstreifen (2) nacheinander erstellt werden, insbesondere in einer einzigen vordefinierten Höhenebene (zn) in wenigstens vier oder fünf Horizontalstreifen (2), insbesondere jeweils mit Versatz (Δy) in Vorschubrichtung zwischen den Horizontalstreifen (2) benachbarter Höhenebenen; und/oder wobei die einzelnen Höhenebenen (zn) des zu errichtenden Bauwerks bei stillstehendem Vortrieb jeweils in mehreren Horizontalstreifen (2) nacheinander erstellt werden, wobei jeder Horizontalstreifen (2) durch eine translatorische Verlagerung von Materialverteileinrichtung (50) und Verdichtungseinrichtung (60) entlang eines/des Querträgers (35) der Rahmenstruktur (30) über die gesamte Arbeitsbreite (x2) oder über die Soll-Breite des Bauwerks erfolgt, insbesondere durch eine einzige unidirektionale translatorische Verlagerung je Horizontalstreifen (2), insbesondere durch eine eindimensionale Verlagerung.

12. Verfahren nach einem der vorhergehenden Verfahrensansprüche, wobei eine entsprechende Höhenebene des zu errichtenden Bauwerks in Bezug auf die Vorschubrichtung der Rahmenstruktur (30) jeweils in einer ersten Etappe durch bidirektionales translatorisches Verlagern entlang der Rahmenstruktur (30) über der Arbeitsbreite (x2) erstellt wird, insbesondere mit Versatz in Vortriebsrichtung zwischen dem Wechsel der Verlagerungsrichtung, und jeweils in einer zweiten Etappe in der nächsten Höhenebenen mit Versatz in Vortriebsrichtung und jeweils mit bezüglich der zuvor erstellten Höhenebene entgegengesetzter bidirektionaler translatorischer Verlagerungsrichtung erstellt wird, insbesondere mit den beiden Etappen in Wiederholung bis zum Erreichen der gewünschten Soll-Höhe (z3) des Bauwerks.

13. Verfahren nach einem der vorhergehenden Verfahrensansprüche, wobei das Einsatzmaterial (1) auf dem Materialflusspfad (M1, M2) vom Boden (80) bis zur erhöhten Materialabgabestelle an drei Materialübergabestellen (P1,P2,P3) kontinuierlich übergeben wird, nämlich: an einer ersten Materialübergabestelle (P1) zwischen einer in Höhenrichtung fördernden Fördereinrichtung (41) und einer zumindest annähernd horizontal entlang der Rahmenstruktur (30) fördernden Fördereinrichtung (42), an einer zweiten Materialübergabestelle (P2) zwischen der horizontal fördernden Fördereinrichtung und einer weiteren zumindest annähernd horizontal entlang der Rahmenstruktur (30) fördernden Fördereinrichtung (43), und an einer dritten Materialübergabestelle (P3) von der weiteren horizontal fördernden Fördereinrichtung zur Materialverteileinrichtung (50); und/oder wobei das Einsatzmaterial (1) in Horizontalstreifen (2), die über die Arbeitsbreite nacheinander in Vortriebsrichtung aneinander gereiht sind, aufgetragen, verteilt und verdichtet wird, insbesondere auf bidirektionalen Bewegungspfaden in Breitenrichtung über die gesamte Arbeitsbreite (x2), insbesondere abwechselnd hin und her.

14. Verfahren nach einem der vorhergehenden Verfahrensansprüche, wobei zunächst in einer ersten Phase ein erster Abschnitt des zu errichtenden Bauwerks/Damms (3) über die gesamte Soll-Höhe (z3) des Damms (3) errichtet wird, insbesondere über wenigstens vier Höhenebene (zn), und daraufhin in einer zweiten Phase ein weiterer Abschnitt über die Soll-Höhe (z3) errichtet wird, insbesondere jeweils entlang der gesamten Längserstreckung (y1) der Einsatzmaterialverarbeitungsvorrichtung (10), insbesondere mit zueinander in den jeweiligen Höhenebenen in Vortriebsrichtung versetzten Horizontalstreifen (2), insbesondere bei Vortrieb mittels eines/des Chassis (20) ausschließlich zwischen den Phasen.

## Claims

1. Feed material processing device (10) configured for applying, distributing and compacting feed material (1) at defined layer heights, in particular for dam, dyke and/or road construction, wherein the feed material processing device (10) comprises:
- a chassis (20) with at least one traction drive (23, 24) and at least one running gear (21, 22), wherein the running gear (21, 22) is part of a chassis (20) comprising at least one first and at least one second running gear (21, 22);
- a frame structure (30), wherein the frame structure (30) is supported on the first and second running gear (21, 22) and defines a span width (x1) of the feed material processing device (10) and provides a working width (x2) for the feed material processing device (10) between the first and second running gear (21, 22);
- a material feed device (40) coupled to the frame structure (30) or supported thereon;
- a material distribution device (50) coupled to the material feed device (40) and displaceable at least in sections over the working width (x2), in particular in a central region thereof, and mounted on the frame structure (30), which material distribution device can be positioned in a plurality of application positions within the working width (x2);
**characterised in that** the material distribution device (50) is configured for applying the feed material (1) in layers on the ground (80) at different predefinable height positions within the working width (x2), wherein the feed material processing device (10) further comprises:
- a controller (70) configured for controlling the material distribution device (50), in particular configured for adjusting the layer thickness of a feed material (1) applied in layers;
- a compacting device (60) mounted displaceably on the frame structure (30) and/or on the material distribution device (50), which compacting device is in material flow connection with the material feed device (40), wherein the compacting device (60) is a compaction roller,
wherein the span width (x1) of the feed material processing device (10) between the first and second running gear (21, 22) provides the working width (x2) for the compacting device (60),
wherein the material distribution device (50) and the compacting device (60) are each displaceable on the frame structure (30) within the working width (x2);
- wherein the controller (70) is further configured for controlling a/the respective movement path of the compacting device (60) and the material distribution device (50) as a function of one another respectively within the working width (x2), wherein the span width (x1) is at least 35 m, wherein the first and second running gear (21, 22) respectively delimit the working width (x2) laterally, wherein the working width (x2) is at least 50% of the span width (x1) of the feed material processing device (10), wherein the feed material processing device (10) is constructed to be symmetrical with respect to the working/advancing direction with two supports (31, 32) to be arranged/arranged opposite one another in each case laterally to the working width (x2) each with a running gear (21, 22).

2. Feed material processing device (10) according to claim 1, wherein the compacting device (60) or at least one compacting unit (63) of the compacting device (60) is rotatably mounted, in particular about a vertical axis (z) or about an axis of rotation inclined at an angle of less than 45° to the vertical axis, and wherein the controller (70) is further configured for setting a steering angle of the at least one compacting unit (63) about the corresponding vertical axis/rotational axis; and/or wherein the compacting device (60) or at least one compacting unit (63) of the compacting device (60) is mounted to be heightadjustable, and wherein the controller (70) is further configured to set the height position (zn) or additionally also an inclination of the at least one compacting unit (63).

3. Feed material processing device (10) according to any of the preceding claims, wherein the compacting device (60) comprises at least two compacting units (63) each configured as a compacting roller.

4. Feed material processing device (10) according to any of the preceding claims, wherein the material distribution device (50) and the compacting device (60) are configured for distributing and compacting the feed material (1) in horizontal strips (2) with a predefinable longitudinal extension; and/or wherein the feed material processing device (10) is configured for applying, distributing and compacting the feed material (1) in horizontal strips (2), which are produced in succession over the working width (x2) in advancing direction, in particular with a respective translational movement of the material distribution device (50) and compacting device (60) exclusively in width direction (x), in particular with a matrix-like movement path with stepwise movement of the running gear/running gears (21, 22) in advancing direction.

5. Feed material processing device (10) according to claim 3, wherein the at least two compacting rollers can be positioned or aligned relative to one another such that the movement path/paths of the compacting rollers map a crabwalk.

6. Feed material processing device (10) according to any of the preceding claims, wherein the frame structure (30) comprises at least one longitudinal beam (38) extending at least approximately in advancing direction of the traction drive (23, 24), which longitudinal beam extends over a length corresponding to a multiple of an single horizontal strip (2) of the structure to be built or over a length corresponding to a multiple of the longitudinal extension of a cross member (35) of the frame structure (30) supporting the material distribution device (50) and the compacting device (60).

7. Feed material processing device (10) according to any of the preceding claims, wherein the feed material processing device (10) defines at least three material transfer points (P1, P2, P3) on the material flow path (M1, M2) defined by the feed material processing device (10) from a delivering material transport unit (4) to the application point defined by a material distribution unit (53) of the material distribution device (50), in particular a first material transfer point (P1) from a first in particular continuously transporting conveying device (41) to a second in particular continuously transporting conveying device (42), a second material transfer point (P2) from the second conveying device (42) to a third in particular continuously transporting conveying device (43), and a third material transfer point (P3) from the third conveying device (43) to the material distribution device (50).

8. Method for applying, distributing and compacting feed material (1) in defined layer heights, in particular for dam, dyke and/or road construction, by means of a feed material processing device (10) according to any of the preceding claims, wherein the feed material (1) is conveyed by means of a material feed device (40) at least in sections within a working width (x2); wherein the feed material (1) is applied and distributed by means of material distribution device (50) on the ground (80) within the working width (x2), in that the material distribution device (50) is positioned at or moved along a plurality of application positions;
**characterised in that** the material distribution device (50) is positioned/moved at different predefinable height positions for applying the feed material (1) in layers on the ground (80), wherein the material distribution device (50) and a compacting device (60) are moved along a/the respective movement path of the compacting device (60) and the material distribution device (50) as a function of one another in such a way that the feed material (1) is both applied and also compacted layer by layer at the respective height positions within the working width (x2) of the running gears (21, 22).

9. Method according to the preceding method claim, wherein the feed material (1) is both applied and compacted within the working width (x2) between at least one first and at least one second running gear (21, 22), wherein the running gears (21, 22) support a frame structure (30) which extends over a span width (x1) above the working width (x2), and on which frame structure (30) the material distribution device (50) and the compacting device (60) are positioned.

10. Method according to any of the preceding method claims, wherein the movement paths of material distribution device (50) and compacting device (60) are set as at least approximately symmetrical movement paths for a synchronous movement of material distribution device (50) and compacting device (60) over the working width (x2), in particular for a movement guided purely translationally on the frame structure (30), in particular transversely to the advancing direction (y), i.e. transversely to the desired longitudinal extension of the structure to be built.

11. Method according to any of the preceding method claims, wherein the individual vertical levels of the structure to be built are each created in succession in a plurality of horizontal strips (2) when the advance/traction drive (23, 24) is stationary, in particular in a single predefined vertical level (zn) in a least four or five horizontal strips (2), in particular in each case with an offset (Δy) in advancing direction between the horizontal strips (2) of adjacent vertical levels; and/or wherein the individual vertical levels (zn) of the structure to be built are each created in succession in several horizontal strips (2) when the drive is stationary, wherein each horizontal strip (2) is produced by a translational movement of the material distribution device (50) and compacting device (60) along a/the cross member (35) of the frame structure (30) over the whole working width (x2) or over the intended width of the structure, in particular by a single unidirectional translational movement per horizontal strip (2), in particular by a onedimensional movement.

12. Method according to any of the preceding method claims, wherein a corresponding height level of the structure to be built is created in a first stage with respect to the advancing direction of the frame structure (30) by bidirectional translational movement along the frame structure (30) over the working width (x2), in particular with offset in the advancing direction between the change of the movement direction, and in each case in a second stage for the next height levels with offset in the advancing direction and in each case with opposite bidirectional translational movement direction with respect to the previously created height level, in particular by the two stages in repetition until the desired target height (z3) of the structure is reached.

13. Method according to any of the preceding method claims, wherein the feed material (1) is continuously transferred onto the material flow path (M1, M2) from the ground (80) to the elevated material discharge point at three material transfer points (P1, P2, P3), namely: at a first material transfer point (P1) between a conveyor device (41) conveying in vertical direction and a conveyor device (42) conveying at least approximately horizontally along the frame structure (30), at a second material transfer point (P2) between the horizontally trasnporting conveyor device and a further conveyor device (43) trasnporting at least approximately horizontally along the frame structure (30), and at a third material transfer point (P3) from the further horizontally conveying device to the material distribution device (50); and/or wherein the feed material (1) is applied, distributed, and compacted in horizontal strips (2), which are arranged in succession over the working width in the advancing direction, in particular on bidirectional movement paths in width direction over the entire working width (x2), in particular alternately back and forth.

14. Method according to any of the preceding method claims, wherein firstly in a first phase a first section of the structure/dam (3) to be built is built over the entire intended height (z3) of the dam (3), in particular over at least four height levels (zn), and in a second phase a further section of the intended height (z3) is built over that, in particular respectively along the whole longitudinal extension (y1) of the feed material processing device (10), in particular with horizontal strips (2) offset relative to one another in the respective height levels in advancing direction, in particular in the case of advance by means a/the chassis (20) exclusively between the phases.

## Revendications

1. Dispositif de traitement de matière de charge (10) conçu pour appliquer, distribuer et compacter la matière de charge (1) dans des hauteurs de couche définies, en particulier pour la construction de barrages, de digues et/ou de routes, dans lequel le dispositif de traitement de matière de charge (10) présente :
- un châssis (20) avec au moins un entraînement de roulement (23, 24) et au moins un mécanisme de roulement (21, 22), dans lequel le mécanisme de roulement (21, 22) fait partie d'un châssis (20) comprenant au moins un premier et au moins un second mécanisme de roulement (21, 22) ;
- une structure de cadre (30), dans lequel la structure de cadre (30) est en appui contre le premier et second mécanisme de roulement (21, 22) et définit une largeur de serrage (x1) du dispositif de traitement de matière de charge (10) et fournit une largeur de travail (x2) pour le dispositif de traitement de matière de charge (10) entre le premier et second mécanisme de roulement (21, 22) ;
- un dispositif d'alimentation en matière (40) couplé à la structure de cadre (30) ou en appui contre celle-ci ;
- un dispositif de distribution de matière (50) couplé au dispositif d'alimentation en matière (40) et déplaçable au moins par sections sur la largeur de travail (x2) en particulier dans une zone centrale de celui-ci et logé au niveau de la structure de cadre (30), qui peut être positionné au niveau d'une pluralité de positions d'application dans la largeur de travail (x2) ;
**caractérisé en ce que** le dispositif de distribution de matière (50) est conçu pour l'application par couche de la matière de charge (1) sur le sol (80) dans différentes positions de hauteur prédéfinissables dans la largeur de travail (x2), dans lequel le dispositif de traitement de matière de charge (10) présente de plus :
- un dispositif de commande (70) conçu pour la commande du dispositif de distribution de matière (50), en particulier conçu pour le réglage de l'épaisseur de couche d'une matière de charge (1) appliquée par couche ;
- un dispositif de compactage (60) logé de manière déplaçable au niveau de la structure de cadre (30) et/ou au niveau du dispositif de distribution de matière (50), qui est en liaison de flux de matière avec le dispositif d'alimentation en matière (40), dans lequel le dispositif de compactage (60) est un rouleau de compactage,
dans lequel la largeur de serrage (x1) du dispositif de traitement de matière de charge (10) entre le premier et second mécanisme de roulement (21, 22) fournit la largeur de travail (x2) pour le dispositif de compactage (60),
dans lequel le dispositif de distribution de matière (50) et le dispositif de compactage (60) sont déplaçables respectivement au niveau de la structure de cadre (30) dans la largeur de travail (x2) ;
- dans lequel le dispositif de commande (70) est de plus conçu pour la régulation d'un/du chemin de déplacement respectif du dispositif de compactage (60) et du dispositif de distribution de matière (50) en fonction l'un de l'autre respectivement dans la largeur de travail (x2), dans lequel la largeur de serrage (x1) s'élève à au moins 35 m, dans lequel le premier et second mécanisme de roulement (21, 22) délimitent respectivement latéralement la largeur de travail (x2) vers l'extérieur, dans lequel la largeur de travail (x2) s'élève au moins à 50 % de la largeur de serrage (x1) du dispositif de traitement de matière de charge (10), dans lequel le dispositif de traitement de matière de charge (10) est constitué en ce qui concerne le dispositif de travail/avance de manière symétrique avec deux appuis (31, 32) agencés/à agencer à l'opposé l'un de l'autre respectivement latéralement de la largeur de travail (x2) avec respectivement un mécanisme de roulement (21, 22).

2. Dispositif de traitement de matière de charge (10) selon la revendication 1, dans lequel le dispositif de compactage (60) ou au moins une unité de compactage (63) du dispositif de compactage (60) est logé de manière rotative, en particulier autour d'un axe vertical (z) ou autour d'un axe de rotation incliné dans un angle inférieur à 45° par rapport à l'axe vertical, et dans lequel le dispositif de commande (70) est de plus conçu pour le réglage d'un débattement d'au moins une unité de compactage (63) autour de l'axe vertical/de rotation correspondant ; et/ou dans lequel le dispositif de compactage (60) ou au moins une unité de compactage (63) du dispositif de compactage (60) est logé de manière réglable en hauteur, et dans lequel le dispositif de commande (70) est de plus conçu pour le réglage de la position verticale (zn) ou en outre aussi une inclinaison d'au moins une unité de compactage (63).

3. Dispositif de traitement de matière de charge (10) selon l'une quelconque des revendications précédentes, dans lequel le dispositif de compactage (60) présente au moins deux unités de compactage (63) respectivement en configuration comme rouleau de compactage.

4. Dispositif de traitement de matière de charge (10) selon l'une quelconque des revendications précédentes, dans lequel le dispositif de distribution de matière (50) et le dispositif de compactage (60) sont conçus pour distribuer et compacter la matière de charge (1) en bandes horizontales (2) avec une étendue longitudinale prédéfinissable; et/ou dans lequel le dispositif de traitement de matière de charge (10) est conçu pour appliquer, distribuer et compacter la matière de charge (1) en bandes horizontales (2), qui sont établies juxtaposées sur la largeur de travail (x2) les unes après les autres dans le sens d'avance, en particulier pour respectivement un déplacement translatoire du dispositif de distribution de matière (50) et dispositif de compactage (60) exclusivement dans le sens de la largeur (x), en particulier pour un chemin de déplacement matriciel avec déplacement progressif du/des mécanisme(s) de roulement (21, 22) dans le sens d'avance.

5. Dispositif de traitement de matière de charge (10) selon la revendication 3, dans lequel les au moins deux rouleaux de compactage sont positionnables ou orientables l'un par rapport à l'autre de telle manière que le/les chemins de déplacement des rouleaux de compactage illustrent une marche en crabe.

6. Dispositif de traitement de matière de charge (10) selon l'une quelconque des revendications précédentes, dans lequel la structure de cadre (30) présente au moins un longeron (38) s'étendant au moins approximativement dans le sens d'avance de l'entraînement de roulement (23, 24), qui s'étend sur une longueur correspondant à un multiple d'une bande horizontale (2) individuelle à établir de la construction à établir ou sur une longueur correspondant à un multiple de l'étendue longitudinale d'un/de la traverse (35) logeant le dispositif de distribution de matière (50) et le dispositif de compactage (60) de la structure de cadre (30).

7. Dispositif de traitement de matière de charge (10) selon l'une quelconque des revendications précédentes, dans lequel le dispositif de traitement de matière de charge (10) définit au moins trois points de remise de matière (P1,P2,P3) sur le chemin de flux de matière (M1, M2) défini par le dispositif de traitement de matière de charge (10) d'une unité de transport de matière (4) livrant jusqu'à un point d'application défini par une unité de distribution de matière (53) du dispositif de distribution de matière (50), en particulier un premier point de remise de matière (P1) d'un premier dispositif de transport (41) transportant en particulier en continu à un second dispositif de transport (42) transportant en particulier en continu, un deuxième point de remise de matière (P2) du deuxième dispositif de transport (42) à un troisième dispositif de transport (43) transportant en particulier en continu, et un troisième point de remise de matière (P3) du troisième dispositif de transport (43) au dispositif de distribution de matière (50).

8. Procédé d'application, de distribution et de compactage de matière de charge (1) dans des hauteurs de couche définies, en particulier pour la construction de barrages, de digues et/ou de routes, au moyen d'un dispositif de traitement de matière de charge (10) selon l'une quelconque des revendications précédentes, dans lequel la matière de charge (1) est transportée au moyen d'un dispositif d'alimentation en matière (40) au moins par sections dans une largeur de travail (x2) ; dans lequel la matière de charge (1) est appliquée et distribuée au moyen d'un dispositif de distribution de matière (50) dans la largeur de travail (x2) sur le sol (80), en ce que le dispositif de distribution de matière (50) est positionné dans une pluralité de positions d'application ou déplacé le long de celles-ci ;
**caractérisé en ce que** le dispositif de traitement de matière (50) est positionné/déplacé pour l'application par couche de la matière de charge (1) sur le sol (80) dans différentes positions verticales prédéfinissables, dans lequel le dispositif de distribution de matière (50) et un dispositif de compactage (60) sont déplacés le long d'un/du chemin de déplacement respectif du dispositif de compactage (60) et du dispositif de distribution de matière (50) en fonction l'un de l'autre de telle manière que la matière de charge (1) soit non seulement appliquée mais aussi compactée dans les positions verticales respectives dans la largeur de travail (x2) de mécanismes de roulement (21, 22) couche pour couche.

9. Procédé selon la revendication précédente, dans lequel la matière de charge (1) est non seulement appliquée mais aussi compactée dans la largeur de travail (x2) entre au moins un premier et au moins un second mécanisme de roulement (21, 22), dans lequel les mécanismes de roulement (21, 22) appuient une structure de cadre (30) qui s'étend sur une largeur de serrage (x1) sur la largeur de travail (x2), et sur laquelle structure de cadre (30) le dispositif de distribution de matière (50) et le dispositif de compactage (60) sont positionnés.

10. Procédé selon l'une quelconque des revendications précédentes, dans lequel les chemins de déplacement du dispositif de distribution de matière (50) et du dispositif de compactage (60) sont réglés comme chemins de déplacement configurés au moins approximativement symétriquement pour un mouvement synchrone du dispositif de distribution de matière (50) et du dispositif de compactage (60) sur la largeur de travail (x2), en particulier pour un déplacement guidé purement translatoirement sur la structure de cadre (30), en particulier transversalement au sens d'avance (y), aussi transversalement à l'étendue longitudinale souhaitée de la construction à ériger.

11. Procédé selon l'une quelconque des revendications précédentes, dans lequel les plans verticaux individuels de la construction à ériger en cas d'avance/entraînement de roulement (23, 24) immobile sont établis respectivement dans plusieurs bandes horizontales (2) les unes après les autres, en particulier dans un unique plan vertical (zn) prédéfini dans au moins quatre ou cinq bandes horizontales (2), en particulier respectivement avec déport (Δy) dans le sens de poussée entre les bandes horizontales (2) de plans verticaux contigus ; et/ou dans lequel les plans verticaux individuels (zn) de la construction à ériger en cas d'avance immobile sont établis respectivement dans plusieurs bandes horizontales (2) les unes après les autres, dans lequel chaque bande horizontale (2) est effectuée par un déplacement translatoire du dispositif de distribution de matière (50) et du dispositif de compactage (60) le long d'une/de la traverse (35) de la structure de cadre (30) sur la largeur de travail entière (x2) ou sur la largeur de consigne de la construction, en particulier par un unique déplacement translatoire unidirectionnel par bande horizontale (2), en particulier par un déplacement à une dimension.

12. Procédé selon l'une quelconque des revendications précédentes, dans lequel un plan vertical correspondant de la construction à ériger par rapport au sens de poussée de la structure de cadre (30) est établi respectivement dans une première étape par déplacement translatoire bidirectionnel le long de la structure de cadre (30) sur la largeur de travail (x2), en particulier avec déport dans le sens d'avance entre le changement du sens de déplacement, et respectivement dans une seconde étape dans les plans verticaux suivants avec déport dans le sens d'avance et respectivement avec le sens de déplacement translatoire bidirectionnel opposé par référence au plan vertical établi précédemment, en particulier avec les deux étapes en répétition jusqu'à l'atteinte de la hauteur de consigne (z3) souhaitée de la construction.

13. Procédé selon l'une quelconque des revendications précédentes, dans lequel la matière de charge (1) est remise en continu sur le chemin de flux de matière (M1, M2) du sol (80) jusqu'au point de livraison de matière relevé aux trois points de remise de matière (P1,P2,P3), à savoir : sur un premier point de remise de matirère (P1) entre un dispositif de transport (41) transportant dans le sens vertical et un dispositif de transport (42) transportant au moins approximativement horizontalement le long de la structure de cadre (30), sur un deuxième point de remise de matière (P2) entre le dispositif de transport transportant horizontalement et un autre dispositif de transport (43) transportant au moins approximativement horizontalement le long de la structure de cadre (30), et sur un troisième point de remise de matière (P3) de l'autre dispositif de transport transportant horizontalement au dispositif de distribution de matière (50) ; et/ou dans lequel la matière de charge (1) est appliquée, distribuée et compactée en bandes horizontales (2) qui sont juxtaposées sur la largeur de travail les unes après les autres dans le sens d'avance, en particulier sur des chemins de déplacement bidirectionnels dans le sens de la largeur sur la largeur de travail entière (x2), en particulier en alternance en va-et-vient.

14. Procédé selon l'une quelconque des revendications précédentes, dans lequel tout d'abord dans une première phase une première section de la construction/digue (3) à ériger est érigée sur la hauteur de consigne (z3) entière de la digue (3), en particulier sur au moins quatre plans verticaux (zn), et sur ce dans une seconde phase une autre section est érigée sur la hauteur de consigne (z3), en particulier respectivement le long de l'étendue longitudinale entière (y1) du dispositif de traitement de matière de charge (10), en particulier avec des bandes horizontales (2) en déport les unes par rapport aux autres dans les plans verticaux respectifs dans le sens d'avance, en particulier lors de l'avance au moyen d'un/du châssis (20) exclusivement entre les phases.
